# EUROPÄISCHE PATENTSCHRIFT

(11) **EP 3 868 663 B1**
(45) Veröffentlichungstag und Bekanntmachung des Hinweises auf die Patenterteilung: **05.04.2023**
(21) Anmeldenummer: 21157433.0
(22) Anmeldetag: 16.02.2021
(51) Int. Cl.: B64D 11/00, B64D 13/00, B60Q 3/44

(54) **PASSAGIERSERVICEEINHEIT MIT EINEM ÜBERZUG, PASSAGIERSITZBEREICH UND FAHRZEUG MIT PASSAGIERSERVICEEINHEIT**
PASSENGER SERVICE UNIT WITH A COVER, PASSENGER SEAT AREA AND VEHICLE WITH A PASSENGER SERVICE UNIT
UNITÉ DE SERVICE PASSAGER DOTÉE D'UN ELEMENT DE RECOUVREMENT, ZONE DE SIÈGE PASSAGER ET VÉHICULE POURVU D'UNITÉ DE SERVICE PASSAGER

(30) Priorität: 24.02.2020 DE 102020104797
(43) Veröffentlichungstag der Anmeldung: 25.08.2021
(73) Patentinhaber: Airbus Operations GmbH, 21129 Hamburg (DE)
(72) Erfinder: CARMONA-PUGA, Guillermo, 21129 Hamburg (DE); QUATMANN, Frank, 21129 Hamburg (DE); ROSCHAT, Bernd, 21129 Hamburg (DE)
(74) Vertreter: Schornack, Oliver

(56) Entgegenhaltungen:
- EP-A1- 0 716 014
- EP-A1- 2 907 751
- EP-A1- 3 546 355
- US-A1- 2015 090 839

## Beschreibung

Die vorliegende Erfindung betrifft eine Passagierserviceeinheit mit einem in einer Längsrichtung verlängerbaren Trägerelement und einem Überzug, in den mindestens ein elektrisches und/oder elektronisches Element integriert ist sowie einen Passagiersitzbereich und ein Fahrzeug mit solch einer Passagierserviceeinheit.

In Verkehrsmitteln, insbesondere in Flugzeugen, Bussen oder Zügen, werden sichtbare Oberflächen der Inneneinrichtung gerne mit Textilien oder Folien bespannt, da dies optisch ansprechende (und somit hochwertiger wirkende) Oberflächen im Vergleich zu herkömmlichen Kunststoffoberflächen ermöglicht.

In der EP 3 546 355 A1 wird eine mit Stoff bespannte Inneneinrichtung beschrieben, wobei der Stoff eine integrierte Anzeigevorrichtung aufweist. Beispielsweise kann der Stoff aus elektrophoretischen Fasern bestehen oder solche enthalten, um eine Anzeigevorrichtung zu bilden. So wird ein Passagiersitz beschrieben, der mit solch einem Stoff überzogen ist, um Informationen für die Passagiere darzustellen.

Die EP 0 716 014 A1 betrifft mit gastechnischen und elektrischen Komponenten versehene Abdeckplatten zum Verschluss von Installationskanälen. Die Abdeckplatten haben als Nut und Feder zusammenwirkende Stirnseiten, sodass eine Abdeckplatte in eine Aussparung einer benachbarten Abdeckplatte zungenförmig eingreift, wobei beide Abdeckplatten überlappend angeordnet sind.

In der US 2015/090839 A1 wird eine Passagierserviceeinheit beschrieben, die ein Gehäuse aufweist, welches ineinander verschränkbare Distanzstücke hat.

Die EP 2 907 751 A1 beschreibt eine Einrichtungskomponente für ein Flugzeug, die einen Grundkörper aufweist, in den eine Vielzahl von Funktionsmodulen, die zusammen eine Passagierserviceeinheit bilden, eingesetzt werden können.

Der Erfindung liegt die Aufgabe zugrunde, eine optisch ansprechende Inneneinrichtung mit zusätzlichen Funktionen für ein Fahrzeug bereitzustellen.

Diese Aufgabe wird durch eine Passagierserviceeinheit mit den Merkmalen gemäß Anspruch 1, einen Passagiersitzbereich mit den Merkmalen gemäß Anspruch 13 und ein Fahrzeug mit den Merkmalen gemäß Anspruch 15 gelöst.

Gemäß einem ersten Aspekt zum besseren Verständnis der vorliegenden Offenbarung umfasst eine Passagierserviceeinheit zum Einbau in einem Passagiersitzbereich eines Fahrzeugs ein in einer Längsrichtung verlängerbares Trägerelement. Ferner umfasst die Passagierserviceeinheit einen Überzug, in den mindestens ein elektrisches und/oder elektronisches Element integriert ist. Dabei kann der Überzug zumindest abschnittsweise das Trägerelement bedecken.

Eine Passagierserviceeinheit wird auch als individuelle/persönliche Serviceeinheit (personal/passenger service unit - PSU) bezeichnet und bietet einem Passagier bestimmte Funktionen, die er von dem Passagiersitz aus steuern kann. Beispielsweise kann eine PSU Auslassdüsen für Frischluft, Lampen für die einzelnen Passagiersitze (insbesondere Leselampen), aber auch eine Ruftaste, um Servicepersonal zu rufen, aufweisen. In Flugzeugen kann eine PSU auch Sauerstoffmasken, die im Notfall oberhalb des Passagiersitzes ausgeworfen werden, umfassen. Daher muss eine PSU an einer bestimmten Position relativ zu dem/den Passagiersitz(en) angeordnet sein.

Das in einer Längsrichtung verlängerbare Trägerelement kann unterschiedliche Dimensionen in verschiedenen Richtungen aufweisen. In mindestens einer dieser Richtungen ist das Trägerelement in seiner Dimension veränderbar, beispielsweise verlängerbar oder es kann verkürzt werden. Unter Längsrichtung ist hier die Richtung zu verstehen, in der das Trägerelement in seiner Dimension verändert werden kann. Diese Richtung kann mit einer Längsrichtung eines Fahrzeugs (also der Fahrtrichtung des Fahrzeugs) übereinstimmen, in dem eine solche Passagierserviceeinheit eingebaut sein kann, weshalb hier vereinfacht von Längsrichtung gesprochen wird.

Das Material des Überzuges kann ein Textil sein, eine Folie, Silikon, Gummi oder auch anderes dehnbares Material/Gewebe. Insbesondere sogenannte "smart fabrics" oder "smart clothes" können für den Überzug verwendet werden.

Die Integration des mindestens einen elektrischen und/oder elektronischen Elements in den Überzug erfolgt über eine entsprechende Auswahl eines bestimmten Gewebes, insbesondere sogenannte "smart fabrics" oder "smart clothes" dienen als Gewebe für einen textilen Überzug. Alternativ oder zusätzlich können bestimmte Fasern ausgewählt werden, die in dem Überzug verwendet werden. Hierzu zählen beispielsweise elektrisch leitende Fasern. Ferner können auch elektrophoretische Fasern, die in der Lage sind, ihre Farbe zumindest abschnittsweise zu verändern, wenn ein elektrisches Feld angelegt wird, oder thermochromische Fasern, die ihre Farbe unter Temperatureinfluss ändern, in dem einen Überzug vorhanden sein. Ebenso können auch Fasern Verwendung finden, mit denen eine kapazitive Änderung erkannt werden kann. Beispielsweise kann sich bei Annäherung oder Berührung durch einen Finger oder ähnlichen kapazitiven Einfluss von außen eine Eigenschaft der Faser ändern, die entsprechend in einer Steuerung detektiert werden kann. So können solche Fasern in den Überzug eingewoben, eingestrickt, eingeflochten oder anderweitig in das Gewebe des Überzugs eingearbeitet werden. Selbstverständlich können auch elektrische und/oder elektronische Bauteile, wie zum Beispiel Leuchtdioden (LED), (gesondert ausgebildete) Berührungssensoren und Ähnliches in den Überzug integriert werden. Ferner können auch Sensoren in den Überzug integriert werden, die Signale zur Steuerung weiterer elektrische und/oder elektronischer Bauteile erzeugen können. Beispielsweise können Sensoren zur Bestimmung einer Temperatur, einer Helligkeit (Licht), einer Luftfeuchtigkeit oder Ähnliches als elektrische und/oder elektronische Bauteile in dem Überzug integriert sein. Anhand der Signale der Sensoren kann beispielsweise eine allgemeine Belüftung oder eine persönliche Frischluftdüse für den einzelnen Passagier aktiviert/deaktiviert werden, wenn die Temperatur und/oder Luftfeuchtigkeit über einem vorgegebenen Schwellenwert liegt, oder eine Leselampe für den einzelnen Passagier kann aktiviert/deaktiviert werden, wenn eine Helligkeit unterhalb eines Schwellenwerts gemessen wird. Diese Sensoren können einerseits bereits in Fasern vor Herstellung des Gewebes für den Überzug integriert werden, andererseits können sie auch anschließend in das Gewebe eingearbeitet werden.

Die (übrigen) Fasern des Überzugs können aus jedem beliebigen Material hergestellt werden. Beispielsweise kann ein Gewebe aus einem natürlichen Stoff (Baumwolle, Wolle, Flachs, Hanf, etc.) verwendet werden. Ebenso können künstliche Materialien eingesetzt werden, wie zum Beispiel zu Fasern verarbeitbare Kunststoffe, Silikon, Glas(fasern), Carbon, etc..

Bei der Verwendung von Kunststoffen für den flexiblen Überzug, wie Folien, Stretch- oder Dehnfolien oder Silikon ist eine Integration von Leiterbahnen und/oder elektrischen Bauteilen ebenfalls in das Bauteil möglich. Mit Integration ist ebenfalls gemeint, dass elektrische und/oder elektronisches Element als weitere Materiallage aufgebracht werden können.

Durch die Verwendung eines Überzugs für die Passagierserviceeinheit kann ein einheitliches Trägerelement für die (gesamte) Passagierserviceeinheit verwendet werden, während der Überzug an die Wünsche des Fahrzeugbetreibers oder Fahrzeugbesitzers angepasst werden kann. So muss lediglich der Überzug an die Farbwünsche und anderen Gestaltungsoptionen des Fahrzeugbesitzers angepasst werden, beispielsweise durch Bedrucken, Einfärben einer oder mehrerer Fasern oder Schichten des Überzugs, etc.. Ferner können dekorative Elemente auf dem Überzug angebracht werden, oder durch eine entsprechende Farbgestaltung in das Gewebe bzw. des Materials des Überzugs eingearbeitet werden.

Neben der besonders ansprechenden Optik des Überzugs kann durch die Integration von elektrischen und/oder elektronischen Elementen in dem Überzug eine Vielzahl von Funktionen an der Oberfläche der Passagierserviceeinheit für die Passagiere angeboten werden. Dadurch lässt sich mit geringem Kostenaufwand eine hochwertig wirkende Passagierserviceeinheit schaffen. Ferner können die Funktionen der Passagierserviceeinheit durch einfachen Austausch des Überzugs verändert oder angepasst werden, ohne eine vollständig neue Passagierserviceeinheit einbauen zu müssen.

Das Trägerelement kann aus Kunststoff oder Metall oder einer Mischung oder Kombination aus beidem hergestellt werden.

In einer Implementierungsvariante kann der Überzug eine Tasche bilden, in die das Trägerelement zumindest teilweise hineingesteckt ist, so dass der Überzug an dem Trägerelement befestigt ist. Mit anderen Worten ist der Überzug an einer Seite (oder an einem Ende) doppellagig ausgebildet, wodurch der Überzug auf zwei Seiten des Trägerelements angeordnet sein kann oder anliegen kann. Dies ermöglicht ein schnelles Befestigen des Überzugs an dem Trägerelement, da lediglich das Trägerelement in die Tasche eingeführt werden muss. Beispielsweise kann der Überzug so dimensioniert sein, dass ein erster Abschnitt gleich groß ist wie eine flache (Vorder-) Seite des Trägerelements und ein an den ersten Abschnitt anschließender zweiter Abschnitt des Überzugs kleiner ist als die flache Seite des Trägerelements. Der zweite Abschnitt kann somit auf einer der flachen Seite des Trägerelements abgewandten (Rück-) Seite des Trägerelements angeordnet sein und eine dazwischenliegende Kante des Trägerelements umspannen. Der Überzug kann weitere Abschnitte umfassen, die mindestens eine weitere Kante umspannen und/oder mindestens an einem weiteren Teil der (Rück-) Seite des Trägerelements angeordnet sind.

So kann der Überzug auch an zwei gegenüberliegenden Seiten jeweils eine Tasche bilden (taschenförmig ausgebildet sein), sodass zwei gegenüberliegende Seiten (Enden) des Trägerelements in je eine Tasche eingeführt werden können. Dadurch lässt sich der Überzug sicher an dem Trägerelement befestigen. Jede Tasche kann dabei an mindestens einem ihrer Seitenabschnitte, wo der erste und zweite (weitere) Abschnitt des Überzugs aufeinander zu liegen kommen, verschlossen sein. Dadurch lässt sich der Überzug einfach anbringen, wobei eine Vorderseite des Trägerelements vollständig von dem Überzug bedeckt ist.

Jede der Taschen kann mit einem Gummiband versehen sein, dass sich insbesondere in dem Abschnitt des Überzugs befindet, der an der Rückseite des Trägerelements angeordnet ist. Dadurch wird die Spannung in dem Überzug, der sich an der Vorderseite des Trägerelements befindet, gewährleistet und eine Fixierung des Trägerelements in der Tasche wird verbessert. Alternativ oder zusätzlich kann der Überzug, der an der Rückseite des Trägerelements angeordnet ist, flexibel ausgestaltet sein, sodass er die Spannung in dem Überzug selbst aufbringt.

An Seiten des Überzugs, an denen keine Tasche angeordnet ist, kann der Überzug so dimensioniert sein, dass er zumindest eine Kante des Trägerelements umspannt. Somit lässt sich das Trägerelement auf einer (Vorder-) Seite vollständig von dem Überzug bespannen. Mit anderen Worten sieht eine mögliche Ausgestaltung somit vor, dass statt Taschen auch mit der Überspannung von Kanten des Trägerelement der Überzug gebildet wird.

In der hier vorliegenden Beschreibung betrifft eine Vorderseite des Trägerelements eine einem Passagierbereich zugewandte Seite, wenn das Trägerelement in dem Passagierbereich (beispielsweise in einem Abschnitt eines Fahrzeugs) eingebaut ist. Mit anderen Worten ist die Vorderseite des Trägerelements nach dem Einbau in dem Passagierbereich sichtbar. Die Rückseite des Trägerelements ist entsprechend die der Vorderseite gegenüberliegende Seite, die nach dem Einbau in dem Passagierbereich zumindest abschnittsweise nicht sichtbar ist bzw. der Primärstruktur des Fahrzeugs zugewandt ist.

Das Trägerelement umfasst einen ersten Abschnitt und einen zweiten Abschnitt, wobei der erste Abschnitt und der zweite Abschnitt des Trägerelements miteinander gekoppelt sind.

Der erste und zweite Abschnitt des Trägerelements sind miteinander verbunden und relativ zueinander beweglich. Das Trägerelement kann insbesondere eine flächige Grundform aufweisen, wobei der zweite Abschnitt innerhalb dieser Fläche (Ebene) und/oder aus dieser Fläche heraus relativ zu dem ersten Abschnitt bewegt werden kann. Dadurch lässt sich mindestens eine Dimension des Trägerelements verändern. Bei der Bewegung kann es sich um eine lineare Bewegung, eine Drehbewegung oder eine Kombination daraus (beispielsweise Verschieben entlang einer gekrümmten Bahn) handeln.

Alternativ oder zusätzlich kann der zweite Abschnitt des Trägerelements an dem ersten Abschnitt des Trägerelements angebracht und befestigt werden. Beispielsweise kann der zweite Abschnitt eine abstehende Haltevorrichtung umfassen, die mit einer entsprechenden Aufnahme am ersten Abschnitt des Trägerelements korrespondiert und daran/darin befestigt werden kann. Ebenso können mehrere zweite Abschnitte an dem ersten Abschnitt angebracht und befestigt werden, um die Ausdehnung des Trägerelements in Längsrichtung zu verändern.

Die jeweilige Veränderung der Dimension des Trägerelements erlaubt eine Anpassung des Trägerelements und somit auch der Passagierserviceeinheit beim Einbau der Passagierserviceeinheit in ein Fahrzeug. Dabei kann die Dimension so verändert werden, dass das Trägerelement verlängert wird oder verkürzt wird. Für gewöhnlich wird eine Passagierserviceeinheit entlang eines zugehörigen Servicekanals in dem Fahrzeug eingebaut. Eine Positionierung entlang des Servicekanals erfolgt dabei unter Berücksichtigung der Position eines Passagiersitzes oder einer Passagiersitzreihe unterhalb des Servicekanals. Wird nun der Abstand zweier nachfolgender Passagiersitze bzw. Passagiersitzreihen verändert, kann durch Veränderung der Dimension des Trägerelements ein entsprechender Ausgleich vorgenommen werden. Die hierfür üblicherweise notwendigen Füllelemente, die eine gesonderte Abdeckung des Servicekanals darstellen, können dadurch entfallen. Da nur der einzelne Überzug anstatt (wie üblich) eine Passagierserviceeinheit mit weiteren Füllelementen sichtbar ist, kann der Deckenbereich des Fahrzeugs optisch ansprechender gestaltet werden.

Bei einem linear oder entlang einer gekrümmten Bahn beweglichen zweiten Abschnitt des Trägerelements können der erste Abschnitt und der zweite Abschnitt des Trägerelements überlappend angeordnet sein. Zumindest ein Teil des zweiten Abschnitts des Trägerelements kann einen entsprechenden Teil des ersten Abschnitts des Trägerelements überlappen. Insbesondere wenn der zweite Abschnitt an dem ersten Abschnitt des Trägerelements anliegt oder den geringsten Abstand zu dem ersten Abschnitt des Trägerelements aufweist, kann diese Überlappung vorliegen. Ist der zweite Abschnitt vom ersten Abschnitt entfernt (größter möglicher Abstand in der Bewegung) kann die Überlappung minimal sein oder ganz aufgehoben sein. Dies ermöglicht, dass der Überzug immer an einem Abschnitt des Trägerelements anliegt. Mit anderen Worten befindet sich kein Hohlraum auf der Rückseite des Überzugs, der andernfalls bei Berührung in den Hohlraum gedrückt werden kann. Dabei könnte der Überzug beschädigt werden (beispielsweise durchstanzt werden), was durch den ausgezogenen Überlappungsbereich des zweiten Abschnitts des Trägerelements verhindert wird.

Der erste Abschnitt und der zweite Abschnitt des Trägerelements sind über mindestens eine Schiene linear beweglich miteinander gekoppelt. Dabei kann die mindestens eine Schiene L-förmig, T-förmig, rund, elliptisch, etc. ausgestaltet sein und mit einer entsprechenden L-förmigen, runden, elliptischen oder ähnlich gestalteten Schiene in Wirkverbindung gebracht werden. Dabei ist eine erste Schiene an dem ersten Abschnitt des Trägerelements und eine zweite korrespondierende Schiene an dem zweiten Abschnitt des Trägerelements angebracht. Anstatt einer zweiten Schiene kann auch mindestens eine Halterung angeordnet sein, entlang der die Schiene des anderen Abschnitts des Trägerelements gleiten kann. Durch vollständiges Entfernen des zweiten Abschnitts des Trägerelements von dem ersten Abschnitt des Trägerelements, beispielsweise durch Herausziehen der Schiene aus der zugehörigen Halterung, kann das Trägerelement in einer Dimension auch verkürzt werden.

In einer weiteren Ausgestaltungsvariante kann die Passagierserviceeinheit ferner eine Verriegelungseinrichtung umfassen, die eine relative Position des zweiten Abschnitts des Trägerelements zu dem ersten Abschnitt des Trägerelements fixiert. Die Verriegelungseinrichtung ist somit dazu eingerichtet, die Bewegung des zweiten Abschnitts des Trägerelements relativ zu dessen erstem Abschnitt an einer beliebigen Position zu blockieren/verriegeln. Die Verriegelung kann dabei stufenlos und/oder an Positionen mit vorgegebenem Raster erfolgen. Beispielsweise kann das vorgegebene Raster Abstände aufweisen, die den Abständen von Befestigungspositionen in Passagiersitzschienen entsprechen. Werden beispielsweise hintereinander angeordnete Passagiersitze oder Passagiersitzreihen um den festen Abstand der Befestigungspositionen in der Sitzschiene verschoben, kann ein schneller Ausgleich der Dimension des Trägerelements und somit der Passagierserviceeinheit erfolgen. Eine stufenlose Verriegelung kann beispielsweise mittels einer Schraube oder anderer Klemmvorrichtung erfolgen, die die bewegliche Schiene an jeder beliebigen Position fixiert.

In einer Ausgestaltungsvariante kann der Überzug zumindest abschnittsweise dehnbar ausgestaltet sein. Hierfür kann der Überzug dehnbare Fasern oder andere dehnbare Materialien aufweisen. Insbesondere kann der Überzug in dem Abschnitt flexibel ausgestaltet sein, in dem sich der zweite Abschnitt von dem ersten Abschnitt des Trägerelements bewegen kann, sodass der Überzug die Bewegung nicht behindert. Nur beispielhaft kann der Überzug Silikon/gummiähnliches Material umfassen, sodass er zumindest abschnittsweise dehnbar wird.

Alternativ oder zusätzlich kann der Überzug auch so dimensioniert sein, dass er ohne wesentliche Dehnung das Trägerelement dessen Vorderseite umspannen kann, wenn sich der zweite Abschnitt des Trägerelements von dem ersten Abschnitt des Trägerelements am weitesten entfernt befindet. Ferner kann eine Öffnung zwischen dem ersten und zweiten Abschnitt des Trägerelements vorgesehen sein. Wird nun der zweite Abschnitt zu dem ersten Abschnitt des Trägerelements bewegt (das Trägerelement wird insgesamt kürzer), kann der überschüssige Überzug durch die Öffnung zu der Rückseite des Trägerelements gesteckt werden. Beispielsweise kann der Überzug zwischen dem ersten und dem zweiten Abschnitt des Trägerelements eingeklemmt werden, wodurch der optische Eindruck der Passagierserviceeinheit nicht übermäßig beeinträchtigt wird, da lediglich der eingeklemmte Falz zu sehen sein wird.

In einer anderen Ausgestaltungsvariante ist der Überzug blickdicht. Dies betrifft auch einen dehnbaren Abschnitt des Überzugs. Zumindest sollte der Überzug über einen Dehnbereich (maximal mögliche Änderung der Dimension des Überzugs entsprechend der maximal möglichen Änderung der Dimension des Trägerelements) blickdicht bleiben. Beispielsweise kann hierfür die Faserdichte des Gewebes für den Überzug erhöht sein. Selbstverständlich kann der Überzug auch aus miteinander verbundenen (beispielsweise verklebten) Fasern bestehen, die weiterhin zumindest abschnittsweise dehnbar sind. Auch kann der Überzug aus einer Membran oder Folie bestehen, in der die elektrischen und/oder elektronischen Elemente integriert sind.

In einer weiteren Ausgestaltungsvariante kann der Überzug auf einer dehnbaren Kunststoffform angeordnet sein, wobei die dehnbare Kunststoffform so geformt ist, dass sie sich über das Trägerelement stülpen lässt. Insbesondere kann die Kunststoffform so dimensioniert sein, dass sie die Vorderseite des Trägerelements sowie dessen Kanten umgreift und sich zumindest abschnittsweise auf einer Rückseite des Trägerelements festhält. Der Überzug kann dabei auf die dehnbare Kunststoffform geklebt sein oder anderweitig flächig daran befestigt sein. Selbstverständlich kann der Überzug auch aus einem dehnbaren Material hergestellt werden, dass die Funktion der dehnbaren Kunststoffform innehat. Nur als Beispiel sei eine Silikonform genannt, die über das Trägerelement gestülpt werden kann.

Alternativ kann eine dehnbare Kunststoffform auch über dem Überzug aufgebracht werden, wenn sich der Überzug bereits auf dem Trägerelement befindet. Wenn die Kunststoffform transparent gestaltet ist, kann dadurch ein zusätzlicher Schutz des Überzugs und der darin integrierten elektrischen und/oder elektronischen Elemente gewährleistet werden, während der Überzug leicht und sicher an dem Trägerelement befestigt werden kann.

Nur als Beispiel kann die Kunststoffform aus Silikon hergestellt sein. Dies ermöglicht eine transparente, dehnbare und haltbare Kunststoffform sowohl über als auch unter dem Überzug.

In noch einer weiteren Ausgestaltungsvariante kann das Trägerelement eine zumindest abschnittsweise umlaufend angeordnete Befestigungsvorrichtung, an der ein umlaufender Rand des Überzugs fixiert ist, umfassen. Umlaufend angeordnet bedeutet im Randbereich des Trägerelements entlang einer Umfangskante. Beispielsweise kann die Befestigungsvorrichtung am Rand oder nahe der Umfangskante des Trägerelements, beispielsweise auf einer Rückseite des Trägerelements, angeordnet sein. Dabei muss die Befestigungsvorrichtung nicht durchgängig an dem gesamten Umfang des Trägerelements entlang verlaufen, sondern lediglich an Abschnitten davon.

Beispielsweise kann die Befestigungsvorrichtung in Form einer Rille ausgebildet sein, in die der Überzug mittels einer Klemmschnur eingeklemmt wird. Eine Klemmschnur ist beispielsweise aus einem flexiblen Material, welches größer dimensioniert ist als der durch die Rille gebildete Hohlraum, sodass die Klemmschnur in der Rille eingeklemmt ist und dabei den Überzug an die Innenseite der Rille drückt. Selbstverständlich kann auch die Rille aus flexiblem Material hergestellt sein, in das eine (feste oder flexible) Klemmschnur eingelegt wird und dabei den Überzug festhält.

Alternativ oder zusätzlich kann die Befestigungsvorrichtung auch mindestens einen Magneten oder ein magnetisch wirksames Material umfassen, sodass der Überzug mittels magnetisch wirksamen Materials bzw. einem Magneten an der Befestigungsvorrichtung festgehalten werden kann.

Ebenfalls alternativ oder zusätzlich kann die Befestigungsvorrichtung auch einen Widerhaken umfassenden Abschnitt eines Klettbandes umfassen, das an der Rückseite des Trägerelements befestigt ist, wobei die Widerhaken dazu eingerichtet sind, sich in dem Überzug zu verhaken. Dies ermöglicht eine einfache und kostengünstige Befestigung des Überzugs an der Rückseite des Trägerelements.

In einer Ausgestaltungsvariante ist die Befestigungsvorrichtung an einer Rückseite des Trägerelements angeordnet. Dabei ist vorzugsweise der Überzug so dimensioniert, dass er die Vorderseite des Trägerelements vollständig bedeckt und um die Außenkante des Trägerelements herum bis zumindest der Befestigungsvorrichtung an der Rückseite des Trägerelements reicht. Durch einen insgesamt umlaufend verspannten Überzug werden Falten des Überzugs auf der Vorderseite des Trägerelements vermieden, wodurch ein optisch hochwertiger Eindruck entsteht, und dennoch eine sehr schnelle und einfache Installation ermöglicht wird.

In einer Implementierungsvariante kann das mindestens eine elektrische und/oder elektronische Element eine Taste, ein Leuchtmittel und/oder ein beleuchtetes oder leuchtendes Symbol umfassen. Die Taste kann mit einer Schaltfunktion versehen sein, sodass sie beispielsweise als eine Ruftaste oder Schalter für eine Beleuchtung fungiert. Auch ist es möglich, dass die Taste die Lautstärke eines Lautsprechers oder Kopfhörerausganges oder die Verdunkelung eines Fensters oder Ähnliches steuert. Hierfür können auch zwei Tasten paarweise eingesetzt werden, um die entsprechende Steuerung nach oben und unten zu bewerkstelligen. Alternativ kann die Taste lediglich einen elektrischen Kreis schließen, solange sie berührt und/oder gedrückt wird, während eine Steuerung den eigentlichen Schaltvorgang übernimmt.

Selbstverständlich können auch mehrere Tasten mit gleicher Funktion in dem Überzug vorgesehen sein. Beispielsweise können Tasten mit gleicher Funktion für jeden Passagier, zu dem diese Passagierserviceeinheit gehört vorgesehen werden. Beispielsweise kann die Passagierserviceeinheit zu einer Sitzreihe mit mindestens zwei Sitzen gehören. Insbesondere im Fall einer Ruftaste ermöglicht dies eine genaue Zuordnung zu dem jeweiligen Passagier, während herkömmliche Passagierserviceeinheiten meist über nur eine Ruftaste verfügen.

Das Leuchtmittel kann als allgemeine Beleuchtung eines Bereichs um die Passagierserviceeinheit fungieren. Durch die Verwendung sogenannter "smart fabrics" kann auch eine Vielzahl von Leuchtmitteln in dem Überzug integriert sein oder eine Vielzahl von Fasern zum Emittieren von Licht angeregt werden. Dadurch kann der Überzug und somit die Passagierserviceeinheit abschnittsweise oder vollständig zum Leuchten gebracht werden. Auch eine Farbe des ausgestrahlten Lichts lässt sich einstellen, sodass der Bereich um die Passagierserviceeinheit (insbesondere unterhalb der Passagierserviceeinheit angeordnete Passagiersitze) ausgeleuchtet werden kann. Alternativ oder zusätzlich kann das Leuchtmittel auch fokussiert auf einen bestimmten Passagiersitz gerichtet sein und beispielsweise als Leselampe dienen. Bei einer Anordnung mehrerer Passagiersitze können selbstverständlich mehrere Leuchtmittel vorgesehen sein, sodass jedem Passagiersitz eine Leselampe zugeordnet ist.

Das Symbol kann sowohl eigenständig leuchtend in dem Überzug angeordnet sein (Symbol aus selbstleuchtenden Bereichen oder Fasern des Überzugs), als auch mit einem Leuchtmittel kombiniert sein (das Leuchtmittel dient als Hintergrundbeleuchtung für ein in dem Überzug vorgesehenen Symbol). Bei den Symbolen kann es sich beispielsweise um Hinweise an die Passagiere handeln, deren Aufleuchten zentral gesteuert werden kann. Beispielsweise kann es sich um Symbole wie "Nicht rauchen", "keine mobilen Geräte verwenden", "Bitte anschnallen", etc. handeln.

Selbstverständlich kann auch eine Taste mit einem Symbol und/oder einem Leuchtmittel kombiniert werden. Beispielsweise kann bei Betätigung der Taste (einem Schaltvorgang) ein Symbol in dem Überzug eigenständig leuchten oder durch ein Leuchtmittel beleuchtet werden, um den Schaltvorgang zu bestätigen, und bei erneuter Betätigung der Taste kann die Beleuchtung des Symbols wieder erlöschen.

In einer anderen Ausgestaltungsvariante kann das Trägerelement einen gegenüber dem übrigen Trägerelement verschwenkbaren Abschnitt umfassen, wobei eine Position des verschwenkbaren Abschnitts mit einer Position eines des mindestens einen elektrischen und/oder elektronischen Elements übereinstimmt. Mit anderen Worten ist der verschwenkbare Abschnitt auf einer Rückseite des elektrischen und/oder elektronischen Elements angeordnet, wenn der Überzug auf dem Trägerelement angeordnet und befestigt ist. Dadurch kann eine Ausrichtung des Überzugs im Bereich des elektrischen und/oder elektronischen Elements im Raum verändert werden.

Nur beispielhaft kann der verschwenkbare Abschnitt einen Randabschnitt des Trägerelements betreffen, an dem Symbole in dem Überzug vorgesehen sind. Durch das Ausschwenken des Abschnitts des Trägerelements können die Symbole in eine besser sichtbare Position gebracht werden. Beispielsweise können die oben beschriebenen zentralgesteuerten Symbole an einem verschwenkbaren Abschnitt des Trägerelements angeordnet sein, der aus einer allgemeinen Deckenfläche des Passagiersitzbereichs in den Passagiersitzbereich herausgeklappt werden kann. Dadurch stehen die Symbole nicht an der Decke des Passagiersitzbereichs, sondern nehmen eine Position ein, in der sie von einem Passagier besser gesehen werden können. Das Ausklappen kann manuell erfolgen oder maschinell gesteuert sein. So können beispielsweise in einem Flugzeug während des Starts und der Landung Symbole, die eine Anschnallpflicht und Ähnliches anzeigen, in den Sichtbereich der Passagiere bewegt werden. Der Überzug ist flexibel und kann daher der Bewegung des verschwenkbaren Abschnitts des Trägerelements folgen. Eine ansonsten notwendige und aufwändige Kabelführung entfällt, da eine elektrische Versorgung in dem Überzug vorhanden ist.

Ebenso ist es denkbar, dass der verschwenkbare Abschnitt in einem mittleren Bereich des Trägerelements angeordnet ist, also um den verschwenkbaren Abschnitt herum das ansonsten ebene Trägerelement vorhanden ist. Dadurch kann der verschwenkbare Abschnitt abweichend von der von dem übrigen Trägerelement gebildeten Fläche eine andere Ausrichtung einnehmen. Der verschwenkbare Abschnitt kann dabei eine runde Form, eine elliptische Form, eine rechteckige Form oder jede beliebige polygonale Form einnehmen.

Alternativ oder zusätzlich kann der verschwenkbare Abschnitt des Trägerelements an einer dem Überzug zugewandten Seite mit einem Widerhaken umfassenden Teil eines Klettbandes ausgestattet sein, wobei die Widerhaken dazu eingerichtet sind, sich in dem Überzug zu verhaken. Dadurch kann auf einfache Weise, lediglich durch Anordnung des Klettbandes auf dem verschwenkbaren Abschnitt, eine effektive Fixierung des Überzugs an dem verschwenkbaren Abschnitt erfolgen. Somit wird der Überzug im Bereich des verschwenkbaren Abschnitts bei jeder Bewegung des verschwenkbaren Abschnitts mitgeführt. Befindet sich in diesem Bereich des Überzugs ein elektrisches und/oder elektronisches Element, kann dieses leicht in seiner Ausrichtung verändert werden. Beispielsweise ein Leuchtmittel, und insbesondere dessen Lichtkegel, kann durch den verschwenkbaren Abschnitt einfach ausgerichtet werden.

Ebenfalls alternativ oder zusätzlich kann der verschwenkbare Abschnitt des Trägerelements an einer den Überzug zugewandten Seite mit einem Magneten oder einem magnetisch wirksamen Material versehen sein, wobei in dem Überzug an einer entsprechenden Position ein magnetisch wirksames Material bzw. ein Magnet integriert ist. Dies ermöglicht ebenfalls eine schnell einzurichtende Befestigung des Überzugs an dem schwenkbaren Abschnitt.

Lediglich als Beispiel kann der verschwenkbare Abschnitt in Form eines Kugelgelenks in/an dem Trägerelement vorgesehen sein. Hierfür kann an dem Trägerelement eine Halterung in Form einer Kapsel vorgesehen sein, in die ein kugelförmiges Bauteil eingesetzt wird. An der dem Überzug zugewandten Seite des kugelförmigen Bauteils kann dieses eine Abflachung aufweisen, an der der Überzug befestigt ist. Die Abflachung kann so angeordnet sein, dass sich der verschwenkbare Abschnitt in eine Position bringen lassen kann, sodass die Abflachung und der darum herum angeordnete Bereich des Trägerelements eine durchgängige gemeinsame Ebene bilden.

In einer weiteren Ausgestaltungsvariante kann in dem Überzug eine elektrisch leitende Leiterbahn (elektrische Leitung) integriert sein, die mit dem mindestens einen elektrischen und/oder elektronischen Element elektrisch verbunden ist. Dies ermöglicht einen nicht sichtbaren elektrischen Anschluss des elektrischen und/oder elektronischen Elements. Ferner entfällt das einzelne elektrische Anschließen des elektrischen und/oder elektronischen Elements beim Installieren der Passagierserviceeinheit, da sowohl die Leiterbahn als auch das elektrische und/oder elektronische Element in dem Überzug integriert sind.

Alternativ oder zusätzlich können verschiedene Leiterbahnen oder Leitungsbahnen in unterschiedlichen Schichten in dem Überzug angeordnet sein. Dadurch können Leiterbahnen einer Schicht einer bestimmten Funktion zugeordnet werden. Beispielsweise können die Leiterbahnen zur Stromversorgung von Leuchtelementen in einer ersten Schicht angeordnet sein, während Leiterbahnen zum Anschließen von Schaltelementen (Tasten) in einer anderen Schicht angeordnet sind.

In einer noch weiteren Implementierungsvariante kann der Überzug eine Kontaktanordnung mit einer Vielzahl von Kontakten zum Anschluss der elektrisch leitenden Leiterbahn(en) umfassen. Selbstverständlich kann der Überzug eine Vielzahl von elektrischen und/oder elektronischen Elementen sowie eine (zugehörige) Vielzahl von Leiterbahnen enthalten, die alle an der Kontaktanordnung des Überzugs angeschlossen sind.

Ebenso kann das Trägerelement eine Kontaktanordnung mit einer Vielzahl von Kontakten, die dazu eingerichtet sind, elektrische Verbindungen mit der Vielzahl von Kontakten der Kontaktanordnung des Überzugs durch gegenseitiges Kontaktieren herzustellen, umfassen. Die beiden Kontaktanordnungen des Trägerelements und des Überzugs bilden somit eine elektrische Verbindung zwischen Trägerelement und dem Überzug. Zwar können beide Kontaktanordnungen als Steckverbindung ausgestaltet sein. Jedoch sind Kontaktanordnungen, bei denen sich die jeweilige Vielzahl von Kontakten gegenseitig lediglich berühren, ohne ineinander gesteckt zu sein, einfacher anzuschließen. Hierfür kann die jeweilige Vielzahl von Kontakten in jeder der Kontaktanordnungen im Wesentlichen in einer Ebene angeordnet sein. Gegebenenfalls können die Kontakte sich leicht von einem Gehäuse der Kontaktanordnung abheben oder von dem Gehäuse abstehen. Dadurch kann die Vielzahl der Kontakte der beiden Kontaktanordnungen leicht aufeinandergelegt werden und einen sicheren elektrischen Kontakt herstellen.

Die Kontaktanordnung des Trägerelements kann an eine Steuerung angeschlossen sein, die elektrische Signale an die Vielzahl von Kontakten der Kontaktanordnung leitet, um das mindestens eine elektrische und/oder elektronische Element in dem Überzug zu steuern. Die Steuerung kann an dem Trägerelement angeordnet sein, beispielsweise an einer Rückseite des Trägerelements.

Alternativ kann die Steuerung auch zentral an einer anderen Stelle des Fahrzeugs vorgesehen sein und über elektrische Leitungen mit der Kontaktanordnung des Trägerelements verbunden sein. Die Steuerung kann beispielsweise Teil eines Passagierkabinenmanagementsystems sein, wenn manche der elektrischen und/oder elektronischen Elemente zentral gesteuert werden müssen (im Fall leuchtender Symbole), oder Signale von manchen der elektrischen und/oder elektronischen Elemente an eine zentrale Stelle geleitet werden müssen (beispielsweise Ruftaste).

Alternativ oder zusätzlich kann die Steuerung auch lediglich eine Stromversorgung darstellen, die eine Spannung an das mindestens eine elektrische und/oder elektronische Element (über die Kontaktanordnungen und elektrischen Leitungen) anlegt. Ferner kann die Steuerung, insbesondere bei Anordnung an dem Trägerelement, ein elektrisches und/oder elektronisches Bauteil umfassen, das das elektrische und/oder elektronische Element in dem Überzug steuert. So kann beispielsweise bei Betätigung einer Taste/Schalter in dem Überzug ein weiteres elektrisches und/oder elektronisches Element in dem Überzug gesteuert werden, wie zum Beispiel das An- und Ausschalten eines Lichts.

Ebenfalls alternativ oder zusätzlich kann die Steuerung in den Überzug integriert sein. Insbesondere Schaltkreise lassen sich sehr dünn ausgestalten und somit in dem Überzug integrieren. Die Kontaktanordnung des Überzugs kann dabei lediglich als Stromversorgung des Überzugs und seiner Schaltkreise/Steuerung dienen.

Weiterhin alternativ oder zusätzlich kann die Kontaktanordnung des Trägerelements eine Haltevorrichtung umfassen und/oder die Kontaktanordnung des Überzugs kann eine Haltevorrichtung umfassen. Dabei ist die jeweilige Haltevorrichtung dazu eingerichtet, die andere Kontaktanordnung zu halten. Beispielhaft kann/können in einer Kontaktanordnung ein Magnet oder mehrere Magnete angeordnet sein, der/die mit einem magnetisch wirksamen Bauteil (oder ebenfalls einem Magneten) an entsprechender Position der anderen Kontaktanordnung in Wirkverbindung treten kann/können. Durch entsprechend gepolter Magneten in beiden Kontaktanordnungen ist eine schnelle elektrische Verbindung zwischen beiden Kontaktanordnungen möglich, wobei die korrekte Polung der einzelnen Kontakte der Kontaktanordnungen gewährleistet ist.

In einer anderen Implementierungsvariante kann die Passagierserviceeinheit ferner eine Sauerstoffmaskenaufbewahrung umfassen, die dazu eingerichtet ist, Sauerstoffmasken aufzunehmen, und im Notfall eine Öffnung für den Zugriff auf die Sauerstoffmasken freizugeben. Die Sauerstoffmaskenaufbewahrung ist beispielsweise auf einer Rückseite des Trägerelements angeordnet und die Öffnung erstreckt sich durch das Trägerelement von dessen Rückseite zu dessen Vorderseite. Die Öffnung kann mit einer Klappe verschlossen sein, die im Notfall geöffnet werden kann. Das Öffnen der Klappe kann zentral gesteuert werden, wobei die Klappe beispielsweise vorgespannt sein kann und nach Lösen einer Verriegelung selbsttätig aufklappt.

In einer weiteren Implementierungsvariante kann der Überzug eine Perforation (beispielsweise eine Mikroperforation) aufweisen, deren Position der Öffnung der Sauerstoffmaskenaufbewahrung oder deren Klappe entspricht. Die Perforation kann dabei dazu eingerichtet sein, eine Öffnung in dem Überzug entsprechend der Öffnung der Sauerstoffmaskenaufbewahrung zu ermöglichen. In dem Beispiel mit einer die Öffnung in dem Trägerelement verschließenden Klappe kann die Perforation dazu eingerichtet sein, aufzureißen, wenn sich die Klappe öffnet. Die Klappe kann ferner auch mit einem Widerhaken umfassenden Klettband versehen sein, sodass sich beim Öffnen der Klappe der an den Widerhaken befestigte Abschnitt des Überzugs mit der Klappe mitbewegt. In jedem Fall kann eine (durch den Überzug) optisch versteckte Sauerstoffmaskenaufbewahrung bereitgestellt werden, die im Notfall wie üblich Sauerstoffmasken für Passagiere bereitstellt.

In einer anderen Implementierungsvariante kann die Passagierserviceeinheit eine Öffnung für eine Frischluftzufuhr umfassen. Beispielsweise kann das Trägerelement eine Öffnung umfassen und auch der Überzug kann eine Öffnung an einer korrespondierenden Stelle zu der Öffnung in dem Trägerelement umfassen. Dadurch lässt sich eine herkömmliche Frischluftzufuhr, insbesondere eine von einem Passagier einstellbare Frischluftdüse, an dem Trägerelement installieren.

Die Öffnung in dem Trägerelement kann ferner zur Anordnung eines Lautsprechers verwendet werden. Alternativ kann eine gesonderte Öffnung in dem Trägerelement für einen Lautsprecher vorgesehen werden. Da der Schall des Lautsprechers durch den textilen Überzug dringen kann, ist eine Öffnung in dem textilen Überzug an einer entsprechenden Position nicht notwendig. Bei einem undurchlässigen (gummi oder folienartigen Überzug muss eine solche Öffnung aber alternativ vorgesehen werden.

Gemäß einem weiteren Aspekt zum besseren Verständnis der vorliegenden Offenbarung umfasst ein Passagiersitzbereich für ein Fahrzeug mindestens eine Passagierserviceeinheit gemäß dem ersten Aspekt oder einer seiner Implementierungsvarianten. Insbesondere kann die mindestens eine Passagierserviceeinheit in einem Deckenbereich des Passagiersitzbereichs oberhalb mindestens eines Passagiersitzes angeordnet sein. Beispielsweise kann die mindestens eine Passagierserviceeinheit in einem Deckenbereich des Passagiersitzbereichs angeordnet sein, den ein durchschnittlicher Passagier im Sitzen mit den Händen erreichen kann.

Oberhalb des Passagiersitzbereichs kann ein Servicekanal angeordnet sein, der Teil einer Deckenkonstruktion oberhalb des Passagiersitzbereichs ist. In dem Servicekanal können Leitungen zur Versorgung der einzelnen Passagierserviceeinheiten angeordnet sein, beispielsweise Stromleitung, Frischluftleitung, Sauerstoffleitung, etc.

Ferner kann der Servicekanal eine Installationsschiene oder andere Halterung umfassen, während eine Passagierserviceeinheit mit einem entsprechenden Bauteil ausgestattet ist, das mit der Installationsschiene oder Halterung in Eingriff gebracht werden kann und dabei die Passagierserviceeinheit in dem Servicekanal hält. Beispielsweise kann eine einfache Klemmvorrichtung in dem Servicekanal angeordnet sein, in die ein entsprechendes Halteelement der Passagierserviceeinheit eingeklemmt werden kann. Dadurch lässt sich eine Klickhalterung für die Passagierserviceeinheit bewerkstelligen.

In einer Implementierungsvariante kann das Trägerelement der mindestens einen Passagierserviceeinheit einen gebogenen Abschnitt umfassen, wobei der gebogene Abschnitt sich von dem Deckenbereich des Passagiersitzbereichs in Richtung des Passagiersitzes erstreckt. Der gebogene Abschnitt kann von in dem Passagiersitzbereich sitzenden oder stehenden Passagieren leichter gesehen werden, da er sich in einem besseren Winkel zur Sichtachse der Passagiere befindet (verglichen mit einer durchgehenden die Decke bildenden Ebene).

In einer weiteren Implementierungsvariante können eine Vielzahl von Trägerelementen mit Passagierserviceeinheit in dem Servicekanal installiert sein. Ein einzelner Überzug kann hierbei die Vielzahl von Trägerelementen überspannen. Dies ermöglicht nicht nur ein einheitliches durchgehendes Bild, wodurch eine optisch ansprechende Deckengestaltung des Fahrzeugs möglich ist. Zudem lassen sich auch mehrere Passagierserviceeinheiten schnell mit der notwendigen Funktionalität, die in dem Überzug integriert ist, einbauen.

Gemäß noch einem weiteren Aspekt zum besseren Verständnis der vorliegenden Offenbarung kann ein Fahrzeug mindestens eine Passagierserviceeinheit gemäß dem ersten Aspekt und/oder mindestens einen Passagiersitzbereich gemäß dem weiteren Aspekt umfassen. Bei dem Fahrzeug kann es sich um jegliches Verkehrsmittel, insbesondere Massenverkehrsmittel, handeln. Beispielsweise kann das Fahrzeug ein Flugzeug, ein Zug, ein Bus, ein Schiff oder ähnliches sein. Selbstverständlich kann die mindestens eine Passagierserviceeinheit auch in einem Pkw oder Führerhaus eines Lkw installiert sein.

Ferner können die oben beschriebenen Aspekte, Implementierungsvarianten und weiteren selbstverständlich kombiniert werden, ohne dass dies explizit beschrieben ist. Jede der beschriebenen Ausgestaltungsvarianten ist somit optional zu jedem der Aspekte, Ausgestaltungen und Varianten oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Bevorzugte Ausführungsbeispiele der Erfindung werden nun anhand der beigefügten schematischen Zeichnungen näher erläutert, wobei:
- Figur 1: eine schematische perspektivische Ansicht der Rückseite eines Trägerelements zeigt;
- Figur 2: schematisch einen Überzug zeigt;
- Figur 3: schematisch eine perspektivische Vorderansicht einer Passagierserviceeinheit zeigt;
- Figur 4: schematisch eine Ansicht der Rückseite eines Überzugs zeigt;
- Figur 5: schematisch das Einsetzen eines Trägerelement in einen Überzug in einer Seitenschnittansicht zeigt;
- Figur 6: schematisch eine Seitenschnittansicht einer alternativen Ausgestaltung einer Passagierserviceeinheit zeigt;
- Figur 7: schematisch eine Seitenschnittansicht einer Ausgestaltungsvariante einer Passagierserviceeinheit zeigt;
- Figur 8: schematisch eine Seitenschnittansicht einer weiteren Ausgestaltungsvariante einer Passagierserviceeinheit zeigt;
- Figur 9: schematisch Ansichten einer Befestigungsvorrichtung für einen Überzug an einem Trägerelement zeigt;

- Figur 10: schematisch perspektivische Ansichten einer Rückseite eines Trägerelements mit Sauerstoffmaskenaufbewahrung und einem beweglichen Abschnitt des Trägerelements zeigt;
- Figur 11: schematisch eine Verriegelungsvorrichtung des beweglichen Abschnitts des Trägerelements zeigt;
- Figur 12: schematisch eine Ausgestaltung eines beweglichen Abschnitts des Trägerelements zeigt;
- Figur 13: schematisch eine Schnittansicht einer Ausgestaltung eines verschwenkbaren Abschnitts eines Trägerelements zeigt;
- Figur 14: schematisch eine Aufsicht eines schwenkbaren Abschnitts eines Trägerelements zeigt;
- Figur 15: schematisch Ansichten eines elektrischen/elektronischen Elements in einem Überzug und eine zugehörige Schnittansicht zeigt;
- Figur 16: schematisch eine elektrische/elektronische Steuerung und Kontaktanordnung eines Trägerelements zeigt; und
- Figur 17: schematisch ein Fahrzeug mit einem Passagiersitzbereich und einer Passagierserviceeinheit zeigt.

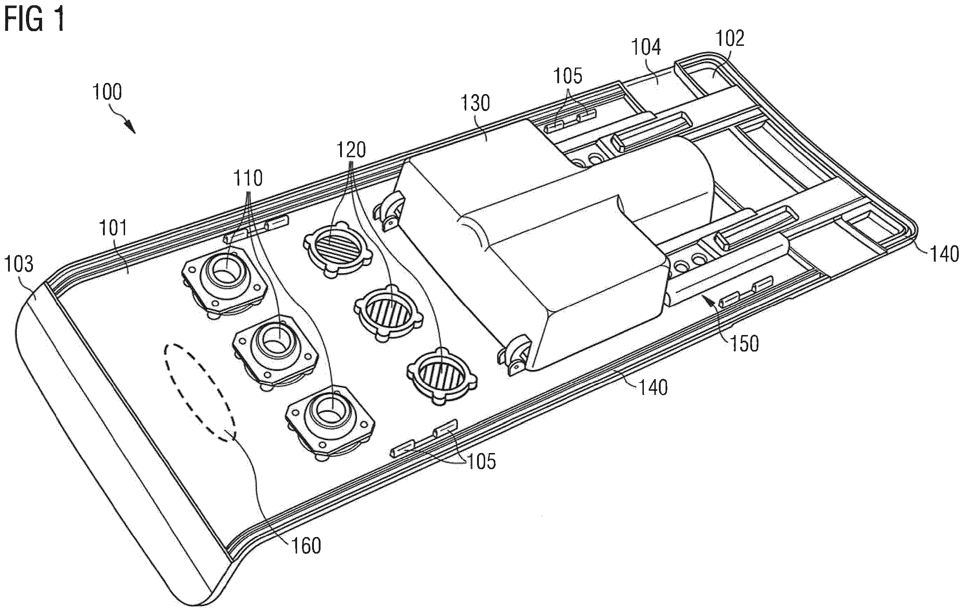

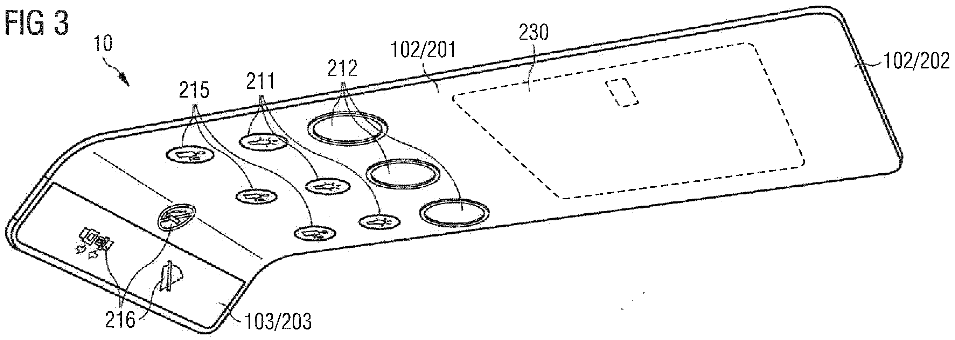

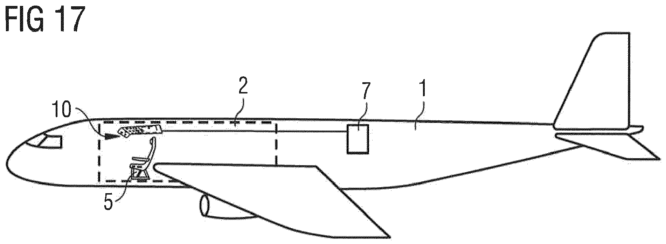

In den Figuren 1 bis 3 ist eine Passagierserviceeinheit 10 dargestellt, die ein Trägerelement 100 und einen Überzug 200 umfasst. In Figur 1 ist die Rückseite des Trägerelements 100 sichtbar. Das Trägerelement 100 weist insbesondere einen flachen und dünnen ersten Abschnitt 101 auf, der sich im Wesentlichen in einer Ebene erstreckt, die einen Deckenabschnitt eines Passagiersitzbereichs 2 (Figur 17) bildet, oder parallel dazu ausgerichtet ist. Der erste Abschnitt 101 kann auch andere Formen einnehmen, wobei eine möglichst flache Vorderseite (die in Figur 3 zugewandte Seite bzw. in Figur 1 nicht sichtbare Seite) für den Überzug 200 eine optisch ansprechende Fläche bildet.

Auf der Rückseite des Trägerelements 100 können Haltevorrichtungen 110, beispielsweise zum Halten von Beleuchtungselementen, sowie Öffnungen 120, beispielsweise Durchlassöffnungen für Frischluft, und/oder Lüftungsgitter und/oder Lautsprecher vorgesehen sein. Ferner kann eine Sauerstoffmaskenaufbewahrung 130 vorgesehen sein, in der Sauerstoffmasken aufbewahrt werden. Dies ist insbesondere bei Passagierserviceeinheiten 10 in Flugzeugen 1 (Figur 17) vorgesehen.

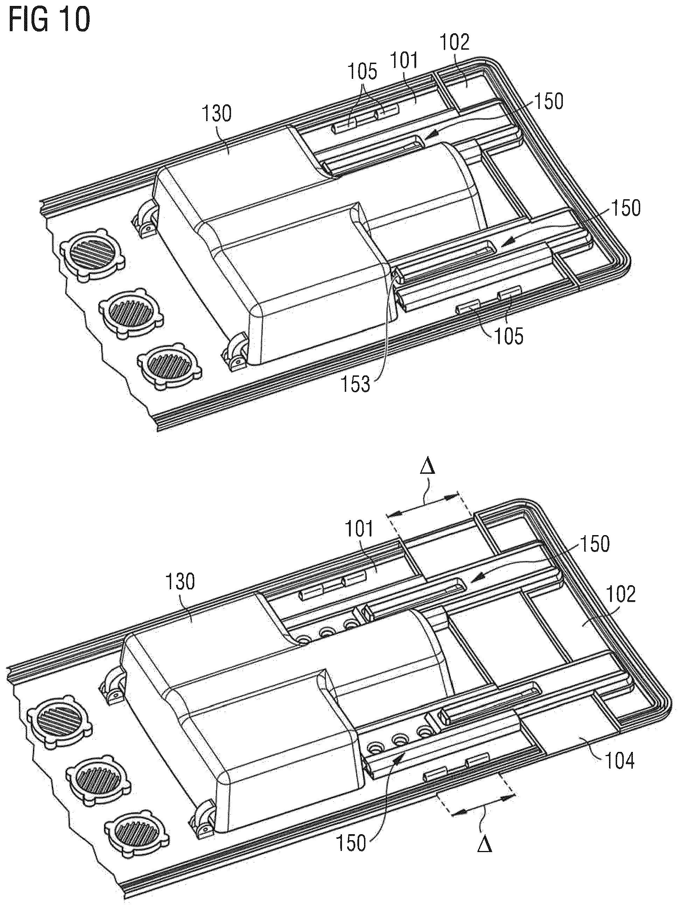

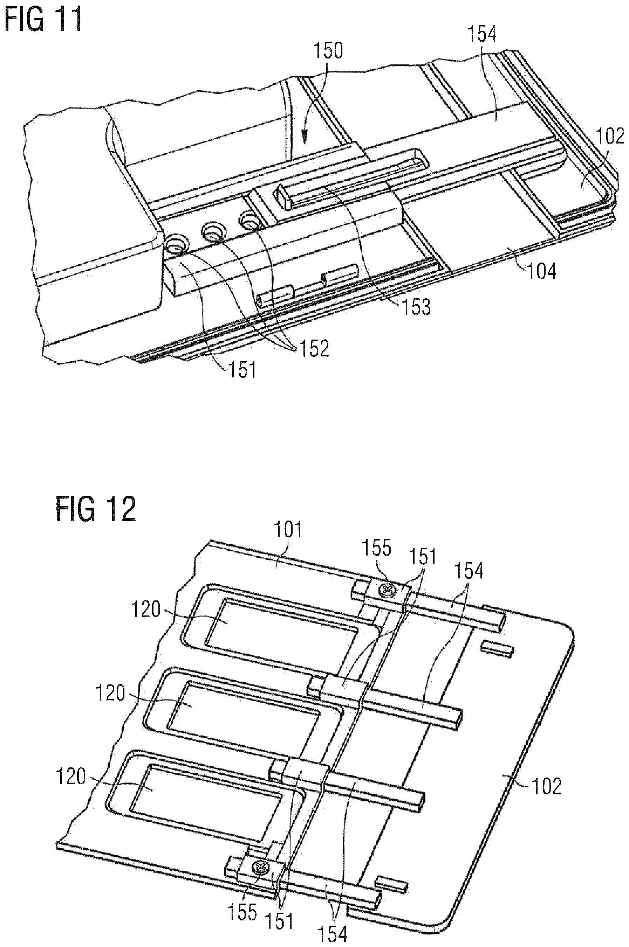

Das Trägerelement 100 kann ferner einen zweiten Abschnitt 102 umfassen, der mit dem ersten Abschnitt 101 verbunden ist und relativ dazu beweglich ist. Dadurch lässt sich die Länge des Trägerelements 100 variabel gestalten. In einem Überlappungsbereich kann ein weiterer Abschnitt 104 vorgesehen sein, der als Teil des zweiten Abschnitts 102 ausgebildet sein kann und bei der Bewegung des zweiten Abschnitts 102 in unterschiedlichem Maße mit dem ersten Abschnitt 101 überlappt, was in Bezug auf die Figuren 10 und 11 noch näher beschrieben wird.

Ferner kann das Trägerelement 100 einen dritten Abschnitt 103 umfassen, der gekrümmt von dem ersten Abschnitt 101 absteht. Insbesondere weist der dritte Abschnitt 103 einen Winkel zu der von dem ersten Abschnitt 101 gebildeten Ebene auf. Dies ermöglicht eine bessere Sichtbarkeit des dritten Abschnitts 103, wie dies in Figur 3 gezeigt ist.

Schließlich können Halterungen 105 an der Rückseite des Trägerelements 100 angeordnet sein. Diese Halterungen 105 dienen der Befestigung des Trägerelements 100 und somit der Passagierserviceeinheit 10 in einem Fahrzeug 1. Nur beispielhaft sind zylindrische Halterungen 105 dargestellt, die in entsprechende Klemmvorrichtungen in dem Fahrzeug eingesetzt werden können, wodurch die Passagierserviceeinheit 10 gehalten wird.

Der Überzug 200 bildet die sichtbare Oberfläche der Passagierserviceeinheit 10 an der Vorderseite des Trägerelements 100. Der Überzug 200 weist entsprechend dem Trägerelement 100 einen ersten Abschnitt 201, einen zweiten Abschnitt 202 und einen dritten Abschnitt 203 auf, die im Wesentlichen den Ausmaßen der korrespondierenden Abschnitte 101 bis 103 des Trägerelements 100 entsprechen. Um die Bewegung des zweiten Abschnitts 100 des Trägerelements 100 zu gewährleisten, kann der Überzug 200 einen flexiblen Bereich 204 aufweisen, in dem der Überzug 200 dehnbar ist. Selbstverständlich kann der gesamte Überzug 200 dehnbar ausgestaltet sein.

In dem Überzug 200 ist mindestens ein elektrisches und/oder elektronisches Element 210 bis 216 integriert. So können Leuchtmittel 210 und zugehörige An- und Ausschalter 211 in dem Überzug 200 integriert sein. Hierfür eignen sich insbesondere sogenannte "smart fabrics", in denen elektrisch leitende Bahnen/Fasern und/oder elektrische/elektronische Bauelemente integriert sind. Zu letzteren gehören auch Ruftasten 215, die optional über ein Leuchtmittel verfügen können, um einen Schaltzustand der Ruftaste 215 anzuzeigen. Schließlich können auch leuchtende Symbole 216 in dem Überzug 200 integriert sein.

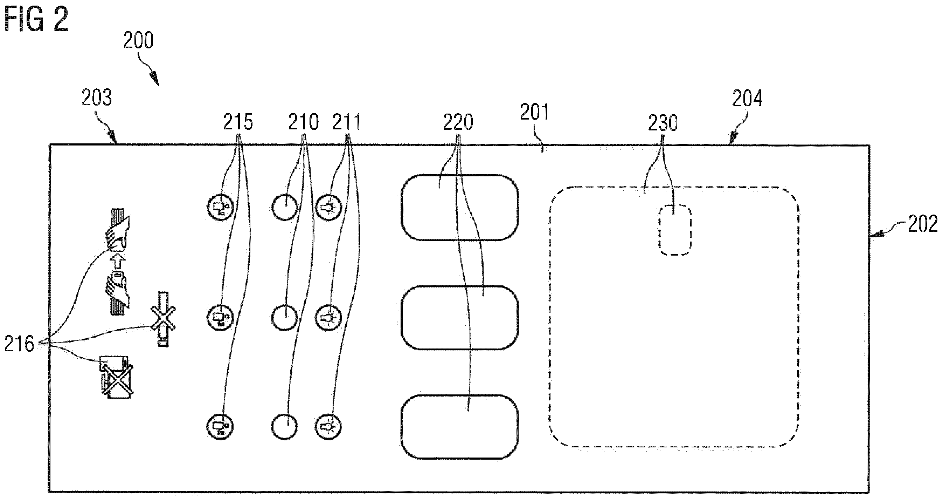

Beim Vergleich der Figuren 2 und 3 ist zu erkennen, dass die Anordnung der elektrischen/elektronischen Elemente 210 bis 216 sowie anderer Abschnitte des Überzugs 200 nicht auf die jeweilige dargestellte Anordnung begrenzt ist. So ist beispielsweise die Anordnung der Tasten/Schalter 211 in den Beispielen gemäß Figuren 2 und 3 unterschiedlich. Dafür sind in Figur 3 optische Elemente, wie beispielsweise Linsen (-scheiben), Diffusionsscheiben, o. ä. zu erkennen, die vor entsprechenden Leuchtmitteln angeordnet sein können. Auch sind in Figur 2 Öffnungen 220 in dem textilen Überzug 200 für die Frischluftzufuhr oder Lautsprecher zu sehen, während in Figur 3 solche Öffnungen nicht vorhanden sind. Alternativ kann der textile Überzug 200 luftdurchlässig (beispielsweise perforiert) sein, sodass eine geschlossene textile Oberfläche gebildet wird, obwohl Frischluft jedem einzelnen Passagier zugeführt werden kann und auch Schall durch den textilen Überzug 200 übertragen werden kann. Bei einem Überzug aus Kunststoff müssen sowohl Öffnung für die Luft wie auch den Schall vorgesehen werden.

Um den Zugriff auf Sauerstoffmasken zu ermöglichen, ist in dem Überzug 200 eine Perforation vorgesehen, die einen Öffnungsbereich 230 für die Sauerstoffmaskenaufbewahrung 130 definiert. Diese Perforation kann aufreißen, wenn sich beispielsweise eine Klappe oder ähnlicher Verschluss der Sauerstoffmaskenaufbewahrung 130 öffnet (in Figur 1 nach unten).

Die Passagierserviceeinheit 10 kann durch Überstülpen des Überzugs 200 über bestimmte Abschnitte des Trägerelements 100 hergestellt werden. Wie insbesondere in Figur 3 zu erkennen ist, kann dadurch auf einfache Weise eine sehr dünne (schlanke) Passagierserviceeinheit 10 geschaffen werden.

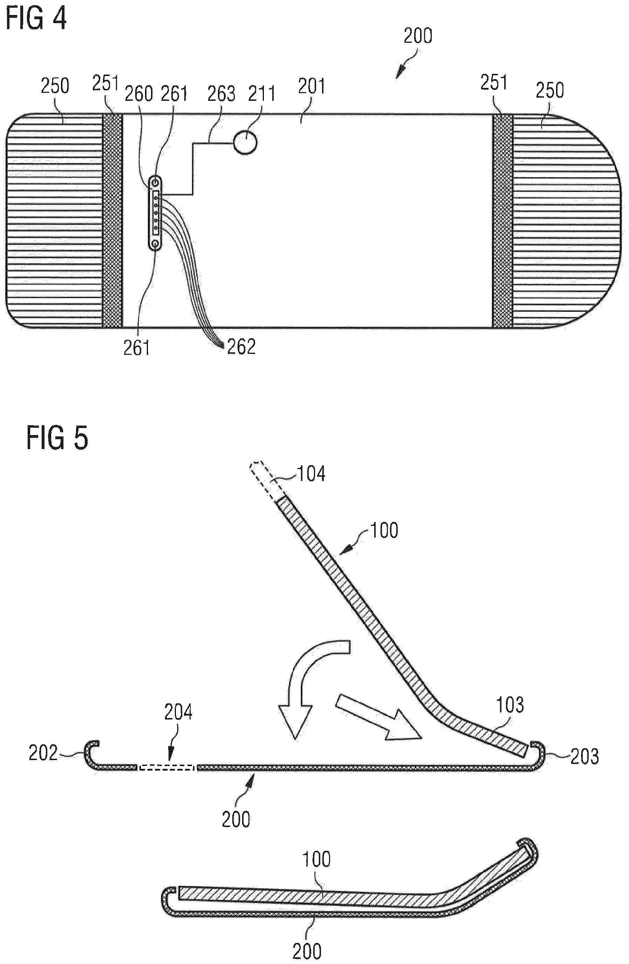

In Figur 4 ist die Rückseite des Überzugs 200 schematisch dargestellt. Beispielhaft sind an beiden Enden des Überzugs 200 je eine Tasche 250 gebildet. Dies kann beispielsweise durch Umlegen der Enden 251 des Überzugs 200 auf dessen Rückseite erfolgen. Dabei können die Enden 251 im Seitenbereich (in Figur 4 oben und unten) mit dem Hauptabschnitt 201 des Überzugs 200 verbunden werden. Selbstverständlich können die gesamten Seitenbereiche verschlossen werden. Dadurch entstehen Taschenöffnungen über die Breite des Überzugs 200, in die die Enden (zweiter Abschnitt 102 und dritter Abschnitt 103) des Trägerelements 100 eingeführt werden können. Somit wird der Überzug 200 wie eine Socke auf das Trägerelement 100 aufgesetzt.

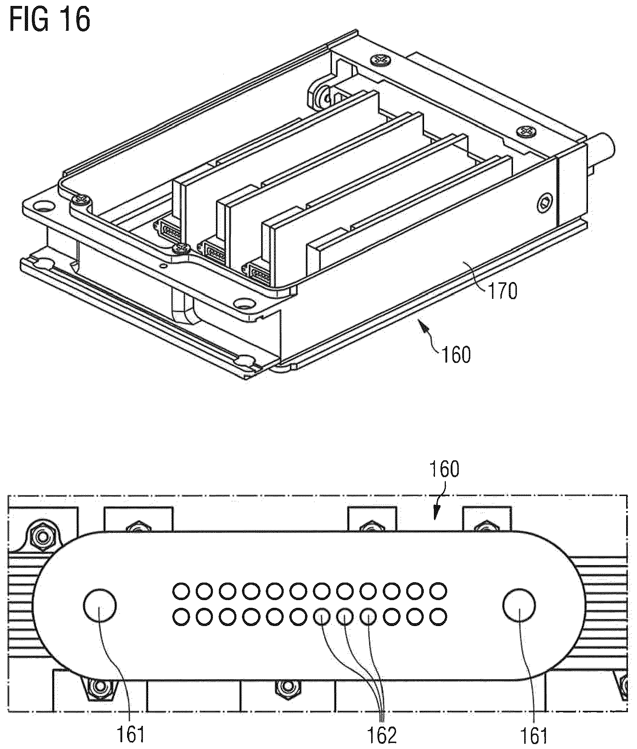

Auf der Rückseite des Überzugs 200 kann sich eine Kontaktanordnung 260 mit einer Vielzahl von Kontakten 262 befinden. Die Kontakte 262 dienen dem Anschluss von elektrisch leitenden Leiterbahnen 263, die in dem Überzug 200 integriert sind. Durch die Leiterbahnen 263 können die elektrischen/elektronischen Elemente 210 bis 216 mit den Kontakten 262 der Kontaktanordnung 260 elektrisch verbunden werden. Die Leiterbahnen 263 können in dem Überzug 200 dadurch integriert sein, dass sie in dessen Fasern angeordnet sind oder Teile der Fasern des Überzugs 200 bilden. Die Kontaktanordnung 260 kann ferner eine Haltevorrichtung 261 umfassen, die im Hinblick auf Figur 16 noch näher erläutert wird.

Anhand der Figuren 5 bis 8 werden verschiedene Ausgestaltungen der Passagierserviceeinheit 10 sowie das Zusammensetzen des Trägerelements 100 und des Überzugs 200 näher erläutert. So kann das Trägerelement 100 mit einem Ende an einem Ende 203 des Überzugs 200 eingefädelt werden, und anschließend an einem gegenüberliegenden Ende 202 des Überzugs 200 eingefädelt werden. Dadurch überspannt der Überzug 200 das Trägerelement 100. An den Enden 202, 203 können Taschen 250 (Figur 4) gebildet sein, in denen das Trägerelement 100 steckt, um den Überzug 200 zu halten.

Alternativ oder zusätzlich kann der Überzug 200 mit einem Silikonüberzug (nicht gesondert dargestellt) an dem Trägerelement 100 gehalten werden. Ebenso ist es möglich, dass der Silikonüberzug das Trägerelement 100 berührt, während der Überzug 200, beispielsweise aus Gewebe oder Textil, auf dem Silikonüberzug angeordnet (zum Beispiel aufgeklebt) ist. Hierbei müssen die Enden 202, 203 des Überzugs 200 nicht taschenförmig ausgebildet sein. Stattdessen reicht ein kleiner Überlappungsbereich aus, wie er in Figur 5 dargestellt ist. Der Silikonüberzug kann gegenüber einem dünner ausgestalteten, beispielsweise textilen Überzug 200 steifer sein und daher eine größere Klemmwirkung auf das Trägerelement 100 erzielen. Ein flexibler Abschnitt 204 des textilen Überzugs 200 und/oder des Silikonüberzugs erleichtert das Aufbringen des Überzugs 200 auf das Trägerelement 100.

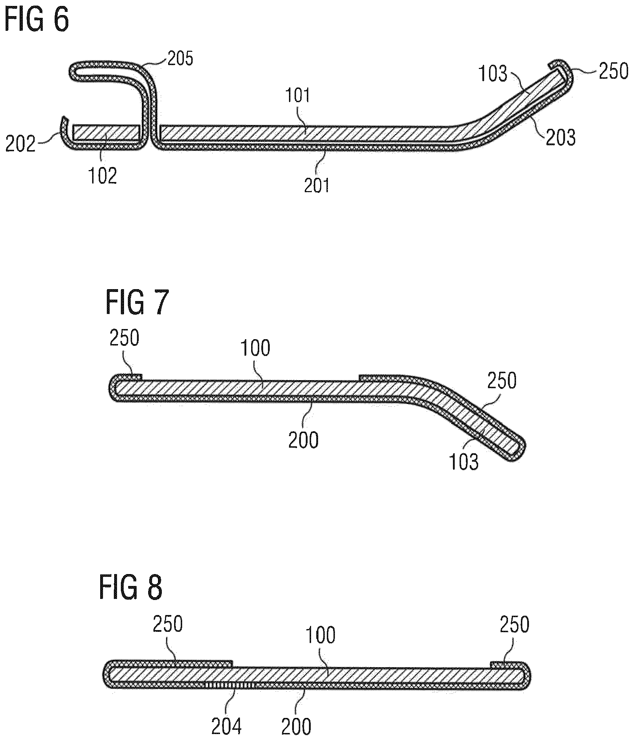

Anstatt oder zusätzlich zu einem flexiblen Bereich 204 des Überzugs 200 kann ein weiterer Abschnitt 205 des Überzugs 200 in eine Öffnung zwischen zweitem Abschnitt 102 und erstem Abschnitt 101 des Trägerelements 100 eingeschoben und dort eingeklemmt werden (siehe Figur 6). In gleicher Wirkweise kann es sich bei dem in Figur 6 links dargestellten Abschnitt des Trägerelements 100 (mit Bezugszeichen 102 gekennzeichnet) auch um ein Trägerelement 100 einer benachbart angeordneten Passagierserviceeinheit 10 handeln, während der Überzug 200 über mehrere Trägerelemente 100 mehrerer Passagierserviceeinheiten 10 gespannt wird. Gegebenenfalls überschüssiges Material 205 des Überzugs 200 kann dabei zwischen zwei Trägerelemente 100 eingeschoben und eingeklemmt werden, wie dies in Figur 6 ersichtlich ist.

Das Trägerelement 100 kann einen schrägen Abschnitt 103 aufweisen, der, wie in Figur 6 gezeigt, zu einer Rückseite des Trägerelements 100 ausgerichtet ist oder, wie in Figur 7 gezeigt, zu einer Vorderseite des Trägerelements 100 ausgerichtet ist. In beiden Fällen entsteht eine schräge Seite, die für einen Passagier unterhalb der Passagierserviceeinheit 10 besser zu sehen ist. Dieser schräge Abschnitt 103 eignet sich besonders für die Anordnung von Symbolen 216, die dem Passagier bestimmte Informationen anzeigen, wie zum Beispiel ein Rauchverbot, eine Anschnallpflicht, die Untersagung der Benutzung elektronischer Geräte, etc.

Ebenso kann das Trägerelement 100 auch durchgängig flach ausgebildet sein, wie dies in Figur 8 dargestellt ist. Diese Form eignet sich besonders, wenn keine Teile vom Deckenabschnitt des Passagiersitzbereichs 2 in diesen hineinragen sollen. Wie ebenfalls in den Figuren 5 bis 8 zu erkennen ist, können die überlappenden Bereiche 250, die eine Tasche bilden, unterschiedlich stark ausgebildet sein. So bietet sich an, im Bereich eines schrägen Abschnitts 103 des Trägerelements 100 (Figur 7) oder im Fall eines dehnbaren Abschnitts 204 des Überzugs 200 (Figur 8) eine tiefere Tasche 250 vorzusehen, um einen besseren Halt des Überzugs 200 zu gewährleisten.

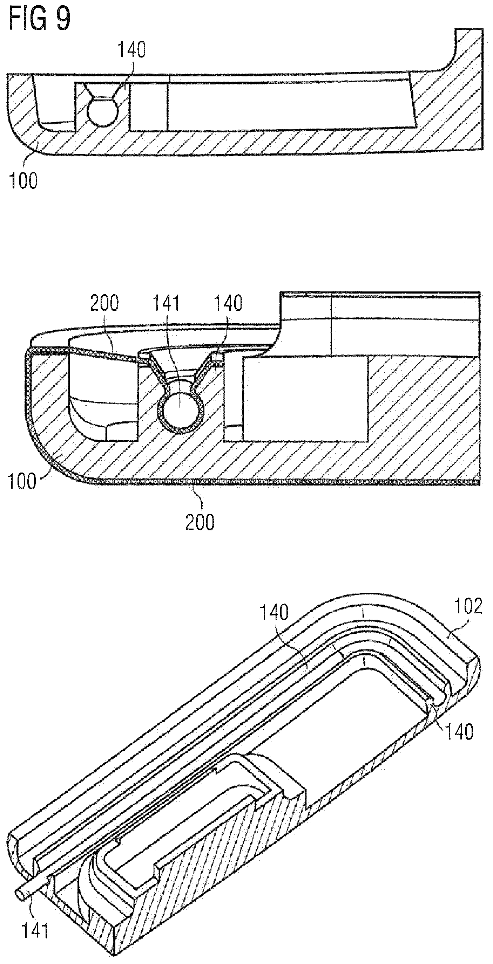

Mit Bezug auf die Figur 9 kann zur Befestigung des Überzugs 200 an dem Trägerelement 100 eine Befestigungsvorrichtung 140 vorgesehen sein. Hierfür kann das Trägerelement 100 eine zumindest abschnittsweise umlaufend angeordnete Befestigungsvorrichtung 140 aufweisen, die insbesondere auf einer Rückseite des Trägerelements 100 vorgesehen ist. Eine einfache Form der Befestigungsvorrichtung 140 kann ein Widerhaken umfassender Abschnitt eines Klettbandes sein, wobei sich die Widerhaken mit dem Überzug 200 verhaken können.

Eine häufiger wiederverwendbare und in Längsrichtung des Trägerelements 100 flexiblere Befestigungsvorrichtung 140 ist in Figur 9 dargestellt. Diese ist in Form einer Rille auf der Rückseite des Trägerelements 100 ausgebildet, in die eine Klemmschnur 141 oder ähnliches längliches Klemmelement eingesetzt werden kann. Die Klemmschnur 141 passt sich dabei in einem Teil der Rille 140 ein, aus dem sie nur durch flexible Verformung lösbar ist. Zwischen der Klemmschnur 141 und der Rille 140 kann ein Ende des Überzugs 200 eingeklemmt werden. Die Rille 140 kann sich im Querschnitt zu einer Öffnung hin verjüngen, sodass die Klemmschnur 141 einen noch besseren Halt findet bzw. ein Herausrutschen der Klemmschnur 141 verhindert wird.

Nach dem gleichen Prinzip können die Halterungen 105 an der Rückseite des Trägerelements 100 (Figur 1) mit einer entsprechenden Klemmvorrichtung (nicht dargestellt) in einem Fahrzeug 1 befestigt werden. Die Halterungen 105 haben eine ähnliche Form wie die Klemmschnur 141, sind jedoch an der Rückseite des Trägerelements 100 befestigt oder darin integriert. An dem Fahrzeug 1 ist daher eine Klemmvorrichtung vorgesehen, die der Befestigungsvorrichtung 140 entspricht, sodass die Klemmvorrichtung in dem Fahrzeug 1 und die Halterung 105 ineinander gesetzt und mittels Klemmwirkung gehalten werden.

In Figur 10 ist der zweite Abschnitt 102 des Trägerelements 100 näher dargestellt. Im oberen Teil der Figur 10 liegt der zweite Abschnitt 102 an dem ersten Abschnitt 101 des Trägerelements 100 an (weist den geringsten Abstand zu dem ersten Abschnitt 101 auf). Im unteren Teil der Figur 10 ist der zweite Abschnitt 102 von dem ersten Abschnitt 101 des Trägerelements 100 beabstandet dargestellt. Dadurch kann die Länge des Trägerelements 100 und somit der Passagierserviceeinheit 10 um den Abstand Δ verlängert werden. Für die hier linear dargestellte Bewegung kann eine Schiene 154 vorgesehen sein, die in Figur 11 im Detail dargestellt ist.

Die Schiene 154 kann beispielsweise an dem zweiten Abschnitt 102 angebracht sein und sich von diesem weg erstrecken. Die Schiene 154 kann dabei mit einem entsprechenden länglichen Element 151 in Eingriff gebracht werden, sodass sich die Schiene 154 nur in Längsrichtung der Schiene 154 bewegen kann.

Ferner kann eine Verriegelungseinrichtung 150 eine relative Position des zweiten Abschnitts 102 zu dem ersten Abschnitt 101 des Trägerelements 100 fixieren. In der in Figur 11 dargestellten Variante der Verriegelungseinrichtung 150 sind in einem vorgegebenen Raster Öffnungen 152 in dem länglichen Element 151 auf dem ersten Abschnitt 101 vorgesehen. Ein korrespondierendes Verriegelungselement 153, hier in Form einer Lasche, kann in eine der Öffnungen 152 eintauchen, wodurch eine Bewegung der Schiene 154 relativ zu dem länglichen Element 151 blockiert wird. Die Lasche 153 kann beispielsweise vorgespannt sein und sich bei Erreichen einer Öffnung 152 selbsttätig in die Öffnung 152 hineinbewegen. Zum Lösen muss die Lasche 153 aus der Öffnung 152 herausgezogen werden, wodurch der zweite Abschnitt 102 des Trägerelements 100 wieder verschoben werden kann.

Das vorgegebene Raster kann einem Raster entsprechen, mit dem Sitzreihen in dem Fahrzeug 1 angeordnet werden können. Beispielsweise weisen Sitzschienen ein entsprechendes Raster auf. Stimmen die Raster der Sitzschiene und der Öffnungen 152 überein, lässt sich bei einer Vergrößerung des Sitzabstandes zweier Sitzreihen auch die Länge der Passagierserviceeinheit 10 um das gleiche Maß verlängern. Dadurch kann ein Servicekanal, in dem die Passagierserviceeinheit 10 angeordnet ist, ohne zusätzliche Abdeckblenden verschlossen werden.

Figur 12 zeigt eine alternative Ausgestaltung einer Schiene 154. Hier weist die Schiene 154 des zweiten Abschnitts 102 einen rechteckigen Querschnitt auf, der in einem entsprechenden rechteckigen Halteelement 151 eingeführt ist. An diesem Halteelement 151 kann eine Schraube 155 vorgesehen sein, die die Schiene 154 einklemmt. Dadurch lässt sich ein stufenloses Verschieben und Befestigen des zweiten Abschnitts 102 relativ zu dem ersten Abschnitt 101 gewährleisten. Figur 12 zeigt schließlich auch Öffnungen 120 in dem Trägerelement 100, in denen Frischluftdüsen oder Auslässe von Frischluftleitungen und/oder Lautsprecher angeordnet werden können.

In allen Ausgestaltungen der Figuren 10 bis 12 lässt sich der zweite Abschnitt 102 des Trägerelements 100 auch vollständig entfernen, wodurch eine Dimension des Trägerelements 100 verkürzt werden kann. Sobald die Schiene 154 nicht mehr in Eingriff mit dem länglichen (Halte-) Element 151 ist, kann der zweite Abschnitt 102 entfernt werden.

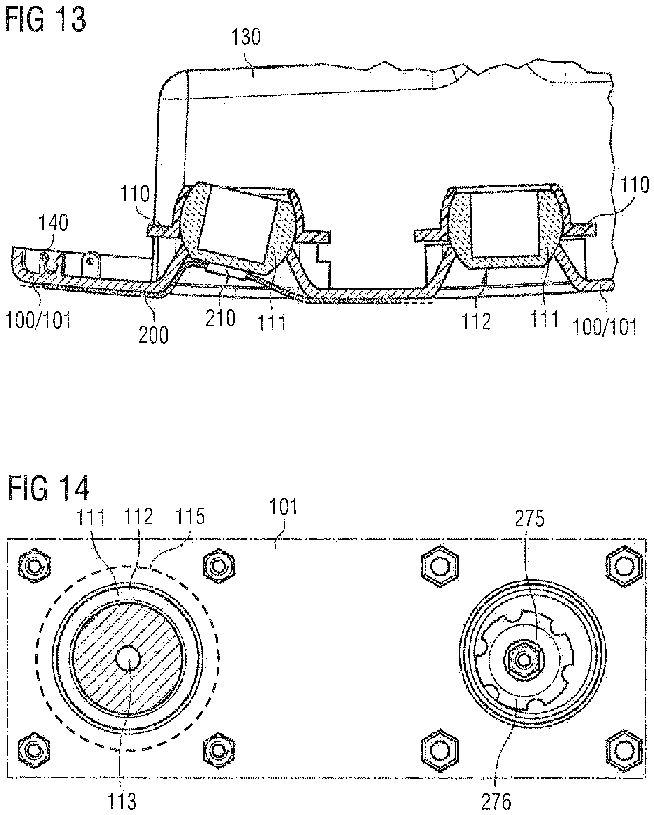

Die Figuren 13 und 14 stellen Details eines verschwenkbaren Abschnitts 111 des Trägerelements 100 dar. So kann eine Haltevorrichtung 110 in Form einer Aufnahme an der Rückseite des Trägerelements 100 vorgesehen sein. Ein verschwenkbarer Abschnitt 111 des Trägerelements 100 ist in die Haltevorrichtung 110 eingesetzt, wobei sich der verschwenkbare Abschnitt 111 zumindest teilweise in der Haltevorrichtung 110 drehen kann. Hierfür können die Haltevorrichtung 110 und der verschwenkbare Abschnitt 111 korrespondierende sphärische Flächen aufweisen. Ferner kann die Haltevorrichtung 110 einen Magneten (nicht dargestellt) umfassen, um den verschwenkbaren Abschnitt 111 in der Haltevorrichtung 110 festzuhalten. Alternativ kann die Haltevorrichtung 110 groß genug dimensioniert sein, sodass der verschwenkbare Abschnitt 111 nicht herausrutschen kann.

Die Haltevorrichtung 110 und der verschwenkbare Abschnitt 111 können an einer Position des Trägerelements 100 vorgesehen sein, die mit einer Position eines des mindestens einen elektrischen und/oder elektronischen Elements 210 bis 216 in dem Überzug 200 übereinstimmt oder zu dieser korrespondiert. An einer dem Überzug 200 zugewandten Seite des verschwenkbaren Abschnitts 111 ist ein Widerhaken umfassender Teil eines Klettbandes 112 vorgesehen. Die Widerhaken des Klettbandes 112 sind dazu eingerichtet, sich in dem Überzug 200 zu verhaken. Selbstverständlich kann auch an dem Überzug 200 ein Schlaufen umfassender Teil eines Klettbandes (nicht gesondert dargestellt) vorgesehen sein, der mit den Widerhaken 112 in Eingriff kommt. Dadurch lässt sich der Überzug 200, wie in Figur 13 dargestellt, durch Verschwenken des verschwenkbaren Abschnitts 111 ausrichten.

Das an dieser Position vorgesehene elektrische/elektronische Element 210 bis 216 kann daher durch den verschwenkbaren Abschnitt 111 ebenfalls ausgerichtet werden. Beispielsweise kann ein Leuchtmittel 210, zum Beispiel in Form einer flachen LED, in dem Überzug 200 integriert sein (wie in Figur 13 dargestellt) und über die Widerhaken 112 an dem verschwenkbaren Abschnitt 111 anliegen. Dadurch wird die Ausrichtung des Leuchtmittels (insbesondere des Leuchtkegels) mithilfe des verschwenkbaren Abschnitts 111 ermöglicht.

Alternativ kann auch, wie in Figur 14 dargestellt, ein Leuchtmittel 275 in dem verschwenkbaren Abschnitt 111 angeordnet sein. Das Licht des Leuchtmittels 275 kann durch eine Öffnung 113 in dem verschwenkbaren Abschnitt 111 austreten. Wird nun der Überzug 200 an der Position des verschwenkbaren Abschnitts 111 lichtdurchlässig ausgestaltet (transparent und/oder perforiert und/oder mittels einer Öffnung), kann eine verschwenkbare Lampe in einfacher und optisch ansprechender Weise umgesetzt werden.

Zur besseren Fixierung des Überzugs 200 kann ein weiterer Widerhaken umfassender Teil eines Klettbandes 115 um den verschwenkbaren Abschnitt 111 an dem Trägerelement 100 angeordnet sein. Dadurch werden Spannungen durch einen größeren Bereich des Überzugs 200 bei Bewegung des verschwenkbaren Abschnitts 111 vermieden.

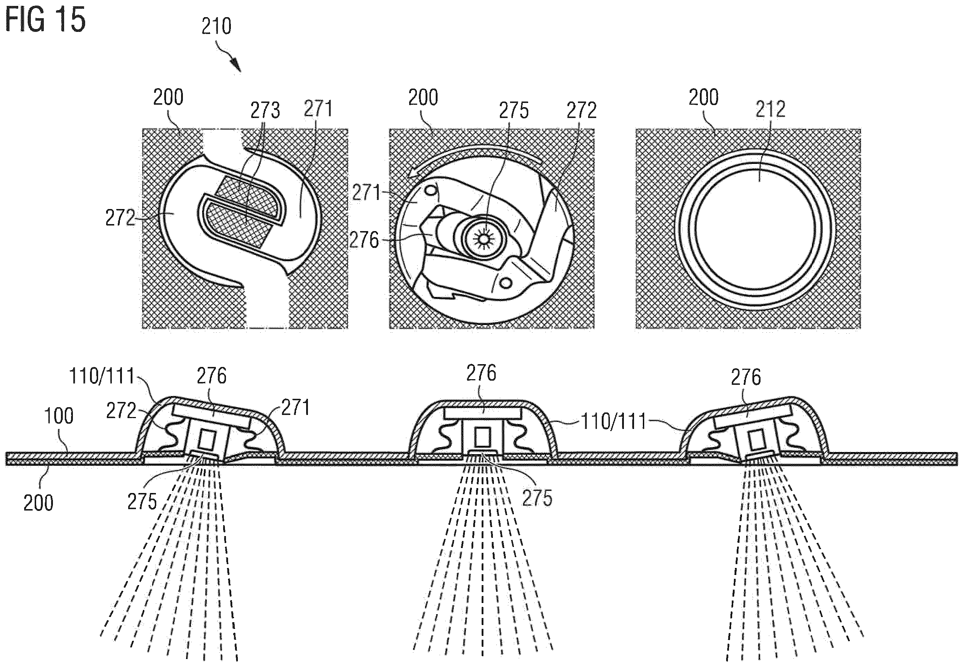

Eine weitere Ausgestaltung der Anordnung eines Leuchtmittel 210 ist in Figur 15 gezeigt. Hierfür kann der Überzug 200 Ausstanzungen umfassen, die zwei hakenförmige Abschnitte 271, 272 bilden. An den jeweiligen Enden der hakenförmigen Abschnitte 271, 272 können elektrische Kontaktflächen 273 vorgesehen sein. Ferner können in den Abschnitten 271, 272 und den daran anschließenden Bereichen des Überzugs 200 elektrische Leitungen (Leiterbahnen) vorgesehen sein. Dadurch wird ein elektrischer Anschluss in dem Überzug 200 integriert.

Aufgrund der Hakenform der Abschnitte 271, 272 können diese in eine Ebene gebracht werden, die sich von der durch den übrigen Teil des Überzugs 200 gebildeten Ebene unterscheidet. Dadurch könne die elektrischen Kontaktflächen 273 an ein elektrisches/elektronisches Bauteil angeschlossen werden, welches sich außerhalb des Überzugs 200 befindet. Beispielsweise kann ein Leuchtmittel 275, wie es in Figur 14 rechts und in Figur 15 unten in einer Schnittansicht dargestellt ist, mit den elektrischen Kontaktflächen 273 der Abschnitte 271, 272 elektrisch angeschlossen werden (die Abschnitte 271, 272 sind zur besseren Übersichtlichkeit der Figur 15 nur für eines der Leuchtmittel 275 mit Bezugszeichen versehen). So kann das Leuchtmittel 275 einen Fuß 276 umfassen, der beispielsweise in dem verschwenkbaren Abschnitt 111 des Trägerelements 100 befestigt ist und über entsprechende elektrische Anschlüsse verfügt, an denen die Kontaktflächen 273 angebracht werden können. Diese Variante ermöglicht selbst das Anschließen von größeren elektrischen/elektronischen Bauteilen.

Die durch die Ausstanzung entstehende Öffnung in dem Überzug 200 kann durch ein optisches Element 212 verschlossen werden.

Figur 16 zeigt schematisch eine elektrische und/oder elektronische Steuerung 170. Diese kann beispielsweise auf der Rückseite des Trägerelements 100 angeordnet und befestigt sein. Alternativ kann die Steuerung 170 an einer beliebigen Stelle des Fahrzeugs angeordnet sein. Alternativ oder zusätzlich kann die Steuerung 170 auch zumindest teilweise in dem Überzug 200 integriert sein. Die Steuerung 170 dient der Versorgung der elektrischen und/oder elektronischen Elemente 210 bis 216 in dem Überzug 200 mit elektrischem Strom und/oder elektrischen Signalen. Zum Anschließen der elektrischen/elektronischen Elemente 210 bis 216 an die Steuerung 170 weist diese eine Kontaktanordnung 160 auf. Die Kontaktanordnung 160 kann mit einer Vielzahl von Kontakten 162 versehen sein. Die Kontakte 162 entsprechen in ihrer Anordnung der Anordnung der Kontakte 262 der Kontaktanordnung 260 des Überzugs 200 (siehe Figur 4). Durch Aufeinanderlegen der Kontakte 162, 262 der jeweiligen Kontaktanordnungen 160, 260 können elektrische Verbindungen zwischen den einzelnen Kontakten und daran angeschlossenen Leitungen (zum Beispiel Leitungen 263 in dem Überzug 200) hergestellt werden.

Die Kontaktanordnung 160 weist ferner eine Haltevorrichtung 161 auf, die in ihrer Position relativ zu den Kontakten 162 der Haltevorrichtung 261 an dem Überzug 200 ebenfalls relativ zu deren Kontakten 262 entspricht. Beispielsweise kann es sich bei den Haltevorrichtungen 161, 261 um mindestens einen Magneten handeln, sodass die beiden Kontaktanordnungen 160, 260 leicht zusammengeführt und fest miteinander verbunden werden können, wobei zeitgleich die einzelnen Kontakte 162, 262 aufeinander und aneinander zu liegen kommen, um eine elektrische Verbindung herzustellen. Diese Form des elektrischen Anschlusses ermöglicht eine schnelle Installation des Überzugs 200 und gleichzeitig ein schnelles elektrisches Anschließen über die Kontaktanordnungen 160, 260.

In Figur 1 ist schematisch ein Bereich für die Kontaktanordnung 160 an dem Trägerelement 100 dargestellt. Hier kann beispielsweise eine Öffnung in dem Trägerelement 100 vorgesehen sein, durch die die Kontaktanordnung 160 hindurch reicht, sodass die Kontaktanordnung 260 des Überzugs 200 diese erreichen und kontaktieren kann. Es ist ebenso möglich, dass die Kontaktanordnung 160 in das Trägerelement 100 integriert ist und auf der Rückseite des Trägerelements 100 eine Anschlussmöglichkeit für den Anschluss der Steuerung 170 vorgesehen ist. Insbesondere wenn die Steuerung 170 nicht an dem Trägerelement 100 angeordnet und befestigt ist, muss lediglich eine Anschlussmöglichkeit für die Kontaktanordnung 160 des Trägerelement 100 vorgesehen sein.

Figur 17 zeigt schließlich eine schematische Darstellung eines Fahrzeugs 1, hier ein Flugzeug, mit einem Passagiersitzbereich 2. In dem Passagiersitzbereich 2 ist mindestens ein Passagiersitz 5 sowie eine zugehörige Passagierserviceeinheit 10 installiert.

Selbstverständlich können mehrere Sitze/Sitzreihen 5 hintereinander in dem Fahrzeug 1 vorgesehen sein, wobei eine entsprechende Vielzahl von Passagierserviceeinheit 10 oberhalb jedes Sitzes/Sitzreihe 5 angeordnet ist. Dabei ist es ausreichend, wenn eine entsprechende Vielzahl von Trägerelementen 100 oberhalb jedes Sitzes/Sitzreihe 5 angeordnet ist und ein einzelner einer Überzug 200 mindestens zwei der Vielzahl von Trägerelementen 100 überspannt. Dadurch kann ein einheitlicher optischer Eindruck in dem Passagiersitzbereichs 2 erzielt werden. Auch ist es möglich, eine einzelne Kontaktanordnung 260 des einen Überzugs 200 (und entsprechend eine einzelne Kontaktanordnung 160 in/an dem Trägerelement 100) vorzusehen, über die sämtliche elektrische/elektronische Elemente 210 bis 216 mit einer Steuerung 170 elektrisch verbunden werden können.

In Figur 17 ist noch beispielhaft eine zentrale Steuerung 7 gezeigt, über die das mindestens eine elektrische/elektronische Element 210 bis 216 gesteuert werden kann. Hierfür ist der eine Überzug 200 mit der zentralen Steuerung 7 elektrisch verbunden. Beispielsweise kann es sich um ein Kabinenmanagementsystem 7 handeln, mit dem sich einzelne oder alle der elektrischen/elektronischen Elemente 210 bis 216 steuern lassen. Die zentrale Steuerung 7 kann in der Kabine oder alternativ in einem Cockpit des Fahrzeugs 1 vorgesehen sein. Selbstverständlich kann die zentrale Steuerung 7 auch mit einer Steuerung 170 in/an dem Trägerelement 100 und/oder einer Steuerung 170 in dem Überzug 200 elektrisch gekoppelt sein und mit dieser zusammenwirken, um das mindestens eine elektrische/elektronische Element 210 bis 216 zu steuern.

Die oben beschriebenen Ausführungsbeispiele und Varianten dienen nur der Veranschaulichung der Erfindung.

## Patentansprüche

1. Passagierserviceeinheit (10) zum Einbau in einem Deckenbereich eines Passagiersitzbereichs (2) eines Fahrzeugs (1), wobei die Passagierserviceeinheit (10) umfasst:
- ein in einer Längsrichtung verlängerbares Trägerelement (100), wobei das Trägerelement (100) einen ersten Abschnitt (101) und einen zweiten Abschnitt (102) umfasst, wobei der erste Abschnitt (101) und der zweite Abschnitt (102) des Trägerelements (100) über mindestens eine Schiene linear beweglich miteinander gekoppelt sind; und
- ein Überzug (200), in den mindestens ein elektrisches und/oder elektronisches Element (210 - 216) integriert ist,
wobei der Überzug (200) zumindest abschnittsweise das Trägerelement (100) bedeckt.

2. Passagierserviceeinheit (10) gemäß Anspruch 1, wobei der Überzug (200) eine Tasche (250) bildet, in die das Trägerelement (100) teilweise hineingesteckt ist, so dass der Überzug (200) an dem Trägerelement (100) befestigt ist.

3. Passagierserviceeinheit (10) gemäß Anspruch 1, ferner umfassend:
- eine Verriegelungseinrichtung (150), die eine relative Position des zweiten Abschnitts (102) zu dem ersten Abschnitt (101) des Trägerelements (100) fixiert.

4. Passagierserviceeinheit (10) gemäß Anspruch 1 oder 3, wobei der Überzug (200) zumindest abschnittsweise dehnbar ausgestaltet ist.

5. Passagierserviceeinheit (10) gemäß einem der Ansprüche 1 bis 4, wobei das Trägerelement (100) eine zumindest abschnittsweise umlaufend angeordnete Befestigungsvorrichtung (140), an der ein umlaufender Rand des Überzugs (200) fixiert ist, umfasst.

6. Passagierserviceeinheit (10) gemäß einem der Ansprüche 1 bis 5, wobei das mindestens eine elektrische und/oder elektronische Element (210 - 216) eine Taste, vorzugsweise eine Ruftaste (215) und/oder einen Schalter (211) für eine Beleuchtung (212, 275), ein Leuchtmittel (275) und/oder ein beleuchtetes oder leuchtendes Symbol (216) umfasst.

7. Passagierserviceeinheit (10) gemäß Anspruch 6, wobei das Trägerelement (100) einen gegenüber dem übrigen Trägerelement (100) verschwenkbaren Abschnitt (111) umfasst, wobei eine Position des verschwenkbaren Abschnitts (111) mit einer Position eines des mindestens einen elektrischen und/oder elektronischen Elements (210 - 216) übereinstimmt.

8. Passagierserviceeinheit (10) gemäß Anspruch 7, wobei der verschwenkbare Abschnitt (111) des Trägerelements (100) an einer dem Überzug (200) zugewandten Seite mit einem Widerhaken umfassenden Teil eines Klettbandes (112) ausgestattet ist, wobei die Widerhaken dazu eingerichtet sind, sich in dem Überzug (200) zu verhaken.

9. Passagierserviceeinheit (10) gemäß einem der Ansprüche 1 bis 8, wobei in dem Überzug (200) eine elektrisch leitende Leiterbahn (263) integriert ist, die mit dem mindestens einen elektrischen und/oder elektronischen Element (210 - 216) elektrisch verbunden ist.

10. Passagierserviceeinheit (10) gemäß Anspruch 9, wobei der Überzug (200) eine Kontaktanordnung (260) mit einer Vielzahl von Kontakten (262) zum Anschluss der elektrisch leitenden Leiterbahn (263) umfasst.

11. Passagierserviceeinheit (10) gemäß Anspruch 10, wobei das Trägerelement (100) eine Kontaktanordnung (160) mit einer Vielzahl von Kontakten (162), die dazu eingerichtet sind, elektrische Verbindungen mit der Vielzahl von Kontakten (262) der Kontaktanordnung (260) des Überzugs (200) durch gegenseitiges Kontaktieren herzustellen, umfasst, und
wobei, vorzugsweise, die Kontaktanordnung (160) des Trägerelements (100) eine Haltevorrichtung (161) umfasst und/oder die Kontaktanordnung (260) des Überzugs (200) eine Haltevorrichtung (261) umfasst.

12. Passagierserviceeinheit (10) gemäß einem der Ansprüche 1 bis 11, ferner umfassend:
- eine Sauerstoffmaskenaufbewahrung (130), die dazu eingerichtet ist, Sauerstoffmasken aufzunehmen, und im Notfall eine Öffnung für den Zugriff auf die Sauerstoffmasken freizugeben, und
wobei, vorzugsweise, der Überzug (200) eine Perforation (230) aufweist, deren Position der Öffnung der Sauerstoffmaskenaufbewahrung (130) entspricht.

13. Passagiersitzbereich (2) für ein Fahrzeug (1), umfassend:
- mindestens eine Passagierserviceeinheit (10) gemäß einem der Ansprüche 1 bis 12,
wobei die mindestens eine Passagierserviceeinheit (10) in einem Deckenbereich des Passagiersitzbereichs (2) oberhalb mindestens eines Passagiersitzes (5) angeordnet ist.

14. Passagiersitzbereich (2) gemäß Anspruch 13, wobei das Trägerelement (100) der mindestens einen Passagierserviceeinheit (10) einen schrägen Abschnitt (103) umfasst, und wobei der schräge Abschnitt (103) sich von dem Deckenbereich des Passagiersitzbereichs (2) in Richtung des Passagiersitzes (5) erstreckt.

15. Fahrzeug (1) mit mindestens einer Passagierserviceeinheit (10) gemäß einem der Ansprüche 1 bis 12 und/oder mit mindestens einem Passagiersitzbereich (2) gemäß Anspruch 13 oder 14.

## Claims

1. Passenger service unit (10) for installation in a ceiling area of a passenger seat area (2) of a vehicle (1), wherein the passenger service unit (10) comprises:
- a carrier element (100) that can be extended in a longitudinal direction, wherein the carrier element (100) comprises a first portion (101) and a second portion (102), wherein the first portion (101) and the second portion (102) of the carrier element (100) are linearly movably coupled to each other via at least one rail; and
- a cover (200), in which at least one electrical and/or electronic element (210 - 216) is integrated,
wherein the cover (200) covers at least a section of the carrier element (100).

2. Passenger service unit (10) according to Claim 1, wherein the cover (200) forms a pocket (250), into which the carrier element (11) is partly inserted, with the result that the cover (200) is fixed to the carrier element (100).

3. Passenger service unit (10) according to Claim 1, further comprising:
- a locking device (150), which fixes a position of the second portion (102) relative to the first portion (101) of the carrier element (100).

4. Passenger service unit (10) according to Claim 1 or 3, wherein the cover (200) is configured to be stretchable in at least a section.

5. Passenger service unit (10) according to one of Claims 1 to 4, wherein the carrier element (100) comprises a fixing device (140) arranged circumferentially, at least in some sections, to which a circumferential edge of the cover (200) is fixed.

6. Passenger service unit (10) according to one of Claims 1 to 5, wherein the at least one electrical and/or electronic element (210 - 216) comprises a pushbutton, preferably a call button (215) and/or a switch (211) for lighting (212, 275), an illuminating means (275) and/or an illuminated or illuminating symbol (216).

7. Passenger service unit (10) according to Claim 6, wherein the carrier element (100) comprises a portion (111) that can be pivoted with respect to the rest of the carrier element (100), wherein a position of the pivotable portion (111) coincides with a position of one of the at least one electrical and/or electronic elements (210 - 216).

8. Passenger service unit (10) according to Claim 7, wherein the pivotable portion (111) of the carrier element (100) is equipped on a side facing the cover (200) with a part of a hook and loop tape (112) comprising a barb, wherein the barbs are configured to hook in the cover (200).

9. Passenger service unit (10) according to one of Claims 1 to 8, wherein an electrically conductive conductor track (263) which is electrically connected to the at least one electrical and/or electronic element (210 - 216) is integrated in the cover (200).

10. Passenger service unit (10) according to Claim 9, wherein the cover (200) comprises a contact arrangement (260) having a large number of contacts (262) for connection to the electrically conductive conductor track (263).

11. Passenger service unit (10) according to Claim 10, wherein the carrier element (100) comprises a contact arrangement (160) having a large number of contacts (162), which are configured to produce electrical connections with the large number of contacts (262) of the contact arrangement (260) of the cover (200) by means of mutual contact, and
wherein, preferably, the contact arrangement (160) of the carrier element (100) comprises a holding device (161) and/or the contact arrangement (260) of the cover (200) comprises a holding device (261).

12. Passenger service unit (10) according to one of Claims 1 to 11, further comprising:
- oxygen mask storage (130), which is configured to hold oxygen masks and, in an emergency, to expose an opening for access to the oxygen masks, and wherein, preferably, the cover (200) has a perforation (230), the position of which corresponds to the opening of the oxygen mask storage (130).

13. Passenger seat area (2) for a vehicle (1), comprising:
- at least one passenger service unit (10) according to one of Claims 1 to 12,
wherein the at least one passenger service unit (10) is arranged in a ceiling area of the passenger seat area (2) above at least one passenger seat (5).

14. Passenger seat area (2) according to Claim 13, wherein the carrier element (100) of the at least one passenger service unit (10) comprises an oblique portion (103), and wherein the oblique portion (103) extends from the ceiling area of the passenger seat area (2) in the direction of the passenger seat (5).

15. Vehicle (1) having at least one passenger service unit (10) according to one of Claims 1 to 12 and/or having at least one passenger seat area (2) according to Claim 13 or 14.

## Revendications

1. Unité de services aux passagers (10) destinée à être installée dans une zone de plafond d'une zone de sièges de passagers (2) d'un véhicule (1), l'unité de services aux passagers (10) comprenant:
- un élément porteur (100) extensible dans une direction longitudinale, l'élément porteur (100) comprenant une première portion (101) et une deuxième portion (102), la première portion (101) et la deuxième portion (102) de l'élément porteur (100) étant accouplées l'une à l'autre de manière mobile linéairement par le biais d'au moins un rail; et
- un élément de recouvrement (200) dans lequel au moins un élément électrique et/ou électronique (210-216) est intégré,
l'élément de recouvrement (200) recouvrant l'élément porteur (100) au moins par portions.

2. Unité de services aux passagers (10) selon la revendication 1, l'élément de recouvrement (200) formant une poche (250) dans laquelle l'élément porteur (100) est partiellement inséré de sorte que l'élément de recouvrement (200) soit fixé à l'élément porteur (100).

3. Unité de services aux passagers (10) selon la revendication 1, comprenant en outre:
- un module de verrouillage (150) qui fixe une position de la deuxième portion (102) relative à la première portion (101) de l'élément porteur (100).

4. Unité de services aux passagers (10) selon la revendication 1 ou 3, l'élément de recouvrement (200) étant conçu pour être extensible au moins par portions.

5. Unité de services aux passagers (10) selon l'une des revendications 1 à 4, l'élément porteur (100) comprenant un dispositif de fixation (140) qui est disposé circonférentiellement au moins par portions et auquel un bord circonférentiel de l'élément de recouvrement (200) est fixé.

6. Unité de services aux passagers (10) selon l'une des revendications 1 à 5, l'au moins un élément électrique et/ou électronique (210-216) étant un bouton, de préférence un bouton d'appel (215) et/ou un commutateur (211) destiné à un éclairage (212, 275), un moyen luminescent (275) et/ou un symbole éclairé ou luminescent (216).

7. Unité de services aux passagers (10) selon la revendication 6, l'élément porteur (100) comprenant une portion (111) qui peut pivoter par rapport au reste de l'élément porteur (100), une position de la portion pivotante (111) correspondant à une position de l'un de l'au moins un élément électrique et/ou électronique (210-216).

8. Unité de services aux passagers (10) selon la revendication 7, la portion pivotante (111) de l'élément porteur (100) étant équipée, sur un côté dirigé vers l'élément de recouvrement (200), d'une partie d'une bande auto-agrippante (112) comprenant un ardillon, les ardillons étant conçus pour s'accrocher à l'élément de recouvrement (200).

9. Unité de services aux passagers (10) selon l'une des revendications 1 à 8, une piste électriquement conductrice (263) étant intégrée dans l'élément de recouvrement (200) et étant reliée électriquement à l'au moins un élément électrique et/ou électronique (210-216).

10. Unité de services aux passagers (10) selon la revendication 9, l'élément de recouvrement (200) comprenant un ensemble de contacts (260) pourvu d'un grand nombre de contacts (262) destinés au raccordement de la piste électriquement conductrice (263).

11. Unité de services aux passagers (10) selon la revendication 10, l'élément porteur (100) comprenant un ensemble de contacts (160) pourvu d'un grand nombre de contacts (162) qui sont conçus pour établir des liaisons électriques avec le grand nombre de contacts (262) de l'ensemble de contacts (260) de l'élément de recouvrement (200) par mise en contact mutuelle, et
de préférence l'ensemble de contacts (160) de l'élément porteur (100) comprenant un dispositif de retenue (161) et/ou l'ensemble de contacts (260) de l'élément de recouvrement (200) comprenant un dispositif de retenue (261).

12. Unité de services aux passagers (10) selon l'une des revendications 1 à 11, comprenant en outre:
- un magasin de masques à oxygène (130) qui est conçu pour recevoir des masques à oxygène et pour libérer une ouverture d'accès aux masques à oxygène en cas d'urgence, et
de préférence, l'élément de recouvrement (200) comportant une perforation (230) dont la position correspond à l'ouverture du magasin de masques à oxygène (130).

13. Zone de sièges de passagers (2) destinée à un véhicule (1), ladite zone comprenant:
- au moins une unité de services aux passagers (10) selon l'une des revendications 1 à 12,
l'au moins une unité de services aux passagers (10) étant disposée dans une zone de plafond de la zone de sièges de passagers (2) au-dessus d'au moins un siège de passager (5).

14. Zone de sièges de passagers (2) selon la revendication 13, l'élément porteur (100) de l'au moins une unité de services aux passagers (10) comprenant une portion inclinée (103), et la portion inclinée (103) s'étendant depuis la zone de plafond de la zone de sièges de passagers (2) en direction du siège de passager (5).

15. Véhicule (1) comprenant au moins une unité de services de passagers (10) selon l'une des revendications 1 à 12 et/ou au moins une zone de sièges de passagers (2) selon la revendication 13 ou 14.
